# EUROPÄISCHE PATENTANMELDUNG

(11) **EP 3 514 508 A1**
(43) Veröffentlichungstag der Anmeldung: **24.07.2019**
(21) Anmeldenummer: 18401007.2
(22) Anmeldetag: 23.01.2018
(51) Int. Cl.: G01F 23/296

(54) **VORRICHTUNG UND VERFAHREN ZUR ENERGIEAUTARKEN ERFASSUNG UND TRANSMISSION VON SCHWINGUNGSMESSDATEN UND SYSTEMZUSTANDSINFORMATIONEN SOWIE VERWENDUNG DER VORRICHTUNG**

(71) Anmelder: Zolitron Technology GmbH, 44799 Bochum (DE)
(72) Erfinder: Zinn, Arndt Hendrik, 58300 Wetter (Ruhr) (DE)
(74) Vertreter: Tanner, Lukas

(57) **Zusammenfassung**

Die Erfindung betrifft eine energieautarke Schwingungsmessvorrichtung (10) eingerichtet zur energieautarken Erfassung von Schwingungsmessdaten an einer Einrichtung (1), z.B. an einem Container, mit einem Energiespeicher (17) zur autarken Energieversorgung, und mit einer Energieaufnahmeeinheit (15) eingerichtet zum Einspeisen von aus der Umgebung geernteter Energie in den Energiespeicher, und ferner mit einem an den Energiespeicher gekoppelten Kommunikationsmodul (14) eingerichtet zur energieautarken drahtlosen Transmission der Schwingungsmessdaten basierend auf wenigstens einem Kommunikationsprotokoll; wobei die Schwingungsmessvorrichtung (10) eingerichtet ist zur energieautarken Erfassung und Transmission der Schwingungsmessdaten in Form von Körperschwingungsmessdaten erfasst an einer Festkörperoberfläche (2.1) der zu vermessenden Einrichtung (1), wobei die Schwingungsmessvorrichtung eine Recheneinheit (18) aufweist und ferner eingerichtet ist zur energieautarken Auswertung der erfassten Körperschwingungsmessdaten in Hinblick auf einen Füllstand (z7) von Flüssigkeit oder Feststoffen (7) in einem von der Einrichtung umgrenzten Innenvolumen (6). Hierdurch kann Autarkie sichergestellt werden. Eine Selbstdiagnose kann erfolgen. Die Erfindung betrifft ferner entsprechende Verfahren und Verwendungen.

## Beschreibung

### TECHNISCHES GEBIET

Die vorliegende Erfindung betrifft eine Vorrichtung und ein Verfahren zur energieautarken Erfassung von Schwingungsmessdaten an einer zu vermessenden Einrichtung, beispielsweise an einem Container, wobei mittels eines Kommunikationsmoduls eine energieautarke drahtlose Transmission der Schwingungsmessdaten bzw. von Systemzustandsinformationen basierend auf einer Auswertung der Schwingungsmessdaten erfolgen kann, insbesondere jeweils über vergleichsweise lange Zeiträume von mehreren Monaten oder sogar Jahren. Auf diese Weise können Systemzustandsinformationen energieautark und drahtlos bereitgestellt werden, im Sinne einer Ferndiagnose. Nicht zuletzt betrifft die vorliegende Erfindung auch eine entsprechende Verwendung. Insbesondere betrifft die Erfindung eine Vorrichtung und ein Verfahren gemäß dem Oberbegriff des jeweiligen unabhängigen Anspruchs.

### HINTERGRUND DER ERFINDUNG

Das möglichst autarke, vollautomatische Überwachen bzw. Diagnostizieren von beliebigen Einrichtungen, insbesondere Aufnahmebehältern oder Maschinen oder Maschinenelementen, wird im Zusammenhang mit der Digitalisierung immer wichtiger, nicht nur bezüglich industrieller Anwendungen, sondern auch bei häuslichen Anwendungen (Heimgebrauch) oder im öffentlichen Raum. Als interessante Anwendungsfelder für entsprechende Sensorik können insbesondere genannt werden: Füllstandsmessungen in Behältnissen, z.B. Containern; Diagnose von Betriebszuständen von Anlagen oder rotierenden Maschinen, insbesondere Pumpen; Fehlerdiagnose basierend auf Schallanalyse.

Es ist heutzutage keine Besonderheit mehr, dass die Sensorik speziell dafür ausgelegt wird, um die Überwachung autark über mehrere Monate vorzunehmen, wobei auch ein Übermitteln von Messwerte an ein Datenbanksystem selbst dann erfolgen kann, wenn große Entfernungen zu überbrücken sind. Gegebenenfalls ist dann eine lokale Funk-Kommunikations-Infrastruktur gar nicht mehr erforderlich. Einer der praxisnahen Vorteile bei einer Anwendung für Container (Leergut oder dergleichen) besteht z.B. darin, dass die Container nur dann geleert werden müssen, wenn ein kritischer Füllstand erreicht ist, bzw. möglichst kurz davor. Der logistische Aufwand kann minimiert werden. Dies ist insbesondere für große Logistik-Dienstleister von Interesse, die nicht selten einen Container-Bestand im Bereich von mehreren Millionen Stück zu betreuen haben.

Als ein praxisnahes Beispiel für etablierte Sensorik kann die üblicherweise an Überseecontainern in der Schifffahrt vorgesehene Überwachungs-Box genannt werden. Neben Positionsdaten können damit beispielsweise Systemzustände wie "Container geöffnet" oder der Zeitpunkt von Systemänderungen erfasst und archiviert werden. Die Anordnung am Container erfolgt insbesondere im Bereich der Tür, um auf mechanische Weise eine Betätigung der Tür erfassen zu können.

Um die Dauer der autarken Betriebsweise zu verlängern, beispielsweise auch bei vollständiger Dunkelheit, sind bereits Maßnahmen vorgenommen worden, um den Energiebedarf der Sensorik zu senken, oder um autark ein Nachspeisen von Energie aus der Umgebung zu ermöglichen, beispielsweise mittels Solarmodulen. Derartige Maßnahmen können beispielsweise unter dem Schlagwort "Micro Energy Harvesting" zusammengefasst werden. Eine mehr oder weniger autarke Betriebsweise ist heutzutage in manchen Fällen schon dann realisierbar, wenn über eine Dauer von z.B. zehn Stunden und einer Lichteinstrahlung von 20.000Lux (entsprechend der Lichteinstrahlung bei einem bedeckten Sommertag) ein Nachladen erfolgen kann.

Jedoch ist nicht nur eine Auslegung des Solarmoduls und/oder des jeweiligen Energiespeichers mit einem Sicherheitsfaktor zielführend, sondern auch Maßnahmen hinsichtlich einer energieoptimierten Steuerung des Betriebsverhaltens. Insbesondere können als Maßnahmen genannt werden: Steuerung des Energiehaushaltes und Betriebsmodus des Sensors basierend auf einem aktuellen Zustand des Energiespeichers; und/oder variables Einstellen des Sendeintervalls des Sensors, insbesondere als Funktion der verfügbare Energie; und/oder Betriebsmodus als Funktion von der aktuell jeweils möglichen Energieeinspeisung: für den Fall, dass keine Energie produziert wird (z.B. bei Dunkelheit), wird ein Betriebsmodus mit minimalem Energiebedarf gewählt.

Die zuvor genannten Vorteile sollen freilich bei möglichst vielen Anwendungen realisierbar sein, unabhängig von der Art der Sensorik. In vielen Fällen wird für eine jeweilige Anwendung ein spezifisch ausgelegter oder angepasster Sensor gefordert, insbesondere da die Art und Weise der Erfassung von Messdaten auf spezifische Weise an den Anwendungsfall optimiert bzw. angepasst werden muss, oder da ein enger Kostenrahmen eingehalten werden muss. Beispiel: Optische Erfassung des Füllstandes in Containern, oder Auswertung von Ultraschall-Messwerten zum Bestimmen des Volumens des verbleibenden Hohlraums eines mit Flüssigkeit gefüllten Containers. In der Tat ist die Erfassung und Auswertung von Füllstands-Informationen in Containern ein weites Feld; zahlreiche unterschiedliche Messmethoden haben sich bereits etabliert, darunter auch gravimetrische und optische Methoden, jedoch sind nicht alle davon besonders gut geeignet für eine Umsetzung im Zusammenhang mit Sensorik mit möglichst hohem Autarkie-Grad. Der jeweilige Energieverbrauch kann sogar ein Ausschluss-Kriterium für eine dieser Messtechniken werden.

Die WO 2005/066592 A1 beschreibt eine Vorrichtung zum Auswerten von Ultraschallwellen, die künstlich in einer Behälterwandung erzeugt werden müssen. Zur Detektion von Flüssigkeits-Levels werden die entsprechenden Vibrationen, beispielsweise erzeugt im Frequenzband 30 bis 150 kHz, innerhalb der Behälterwandung weitergeleitet und nach einer gewissen Wegstrecke detektiert. Je nach Füllstand ergibt sich eine spezifische Art und Weise der Weiterleitung der Vibrationen in der Containerwand. Die Wegstrecke soll möglichst zumindest annähernd vollumfänglich sein, und die Ausbreitungsrichtung soll in vertikaler Richtung sein. Die Art und Weise der Detektion ist durch die verwendeten Messfühler vorgegeben (so genannte "vibration-to-signal transducer" bzw. "air transducer"; beispielhaft werden auch gepulste Laser und Magnetspulen als verwendbare Messfühler genannt). Die Detektion erfolgt insbesondere basierend auf den Amplituden der Vibrationen, wobei zwei Messfühler an einem Deckel des Containers befestigt sind.

Die WO 2012/158371 A2 beschreibt ein Verfahren zum Analysieren von akustischer Schall-Antworten aus einem Behälter, zum Bestimmen des Füllstandes im Behälter. Dabei wird ein bestimmtes Schallmuster mittels einer Mehrzahl von Sensoren in relativer Anordnung zueinander erzeugt. Die Auswertung kann insbesondere auf optische Weise durchgeführt werden.

Die WO 2017/137832 A1 beschreibt Kamera-Sensorik zum Erfassen des Füllstands in Containern, welche dank visuellem Kontakt zum Behälterinneren auf optische Weise in vergleichsweise hoher Güte ein 3D-Modell davon erstellen kann.

Die JP 2016-020883 A beschreibt ein System von energieautarken Sensoren zur Überwachung und Diagnose des Zustands eines Bauwerks oder anderen großen Gebildes und insbesondere die Sicherstellung einer ausreichenden Energieversorgung aller Sensoren. Die Energieversorgung erfolgt über eine Solarzelle.

Die WO 2014/108206 A1 beschreibt ein autarkes Sensorsystem mit Sensor, Transmitter-Einheit, autarker Energiequelle und Kontroll-Einheit. Letztere regelt die Durchführung von Messungen und die Datenübertragung, insbesondere in Abhängigkeit von der bereitgestellten Energiemenge. Dabei wird die momentane, durch die Energiequelle erzeugte Energie als Grundlage für die Regelung genommen. In einem ersten Schritt erfolgt das Stoppen von Messungen. Wahlweise kann auch eine Entkopplung vom Netzwerk erfolgen.

Soll der Grad der Unabhängigkeit (Autarkie) der Sensorik weiter gesteigert werden, sind in vielen Fällen besondere Maßnahmen bezüglich des Energiehaushaltes erforderlich. Insbesondere bei der Verwendung von Solarmodulen besteht eine Schwierigkeit darin, sehr niedrige Energieinhalte nutzen zu können (z.B. stark verhangener Himmel, wenig Sonneneinstrahlung, unvorteilhafte Ausrichtung des Solarmoduls), um einen Energiespeicher laden zu können. In vielen Situationen reicht die vom Solarmodul abgegebene Energiemenge nicht aus, um einen Ladevorgang zu initiieren. Eine diesbezügliche Maßnahme besteht darin, mittels des Solarmoduls zunächst einen Kondensator zu laden, um damit einen Mindest-Ladeimpuls zum Laden des Akkus bereitstellen zu können. Diese Maßnahme wird auch gern zur Vermeidung von Selbstentladung realisiert (so genanntes "trickle charging").

Die bisher verfügbare Technologie kann jedoch insbesondere den Anforderungen an Autarkie (insbesondere hinsichtlich der gewünschten Dauer) sowie an die Flexibilität hinsichtlich der Anwendungsmöglichkeiten noch nicht auf zufriedenstellende Weise gerecht werden. Es besteht daher Bedarf an universell möglichst hinsichtlich diverser Anwendungen verwendbarer Sensorik, die zum einen eine belastbare, zuverlässige Diagnose sicherstellen kann, zum anderen auch in einem hohen Grade autark ist, und wenig oder gar keiner Wartung bedarf, möglichst über viele Jahre. Dies würde nicht zuletzt auch eine Anwendung auch an örtlich/geometrisch oder geografisch schwer zugänglichen Positionen erlauben. Nicht zuletzt besteht ein gewisser Kostendruck, wenn die Sensorik z.B. zum Ausrüsten eines beliebigen Containers oder sogar einer beliebigen Mülltonne verwendbar werden soll.

### ZUSAMMENFASSUNG DER ERFINDUNG

Aufgabe ist, eine Vorrichtung und ein Verfahren bereitzustellen, womit sich autarke Messungen und Diagnosen an Vorrichtungen, Maschinen, Anlagen oder Einrichtungen jeglicher Art erleichtern lassen, basierend auf einer Erfassung und Auswertung von Schwingungsdaten. Auch eine Aufgabe ist, Vorrichtung und Verfahren derart auszugestalten, dass wenig Wartungsaufwand an der Vorrichtung bzw. an der zu überwachenden Einrichtung erforderlich ist, und dass ein hoher Grad an Autarkie der Messtechnik sichergestellt werden kann. Nicht zuletzt ist es eine Aufgabe, Vorrichtung und Verfahren für ein breites Anwendungsspektrum bereitzustellen, insbesondere auch hinsichtlich einer Füllstandsmessung mit hohem Autarkie-Grad, insbesondere an Containern.

Zumindest eine dieser Aufgaben wird durch eine energieautarke Schwingungsmessvorrichtung gemäß Anspruch 1 sowie durch ein Verfahren gemäß dem jeweiligen nebengeordneten Verfahrensanspruch gelöst. Vorteilhafte Weiterbildungen der Erfindung werden in den jeweiligen Unteransprüchen erläutert. Die Merkmale der im Folgenden beschriebenen Ausführungsbeispiele sind miteinander kombinierbar, sofern dies nicht explizit verneint ist.

Bereitgestellt wird eine energieautarke Schwingungsmessvorrichtung eingerichtet zur energieautarken Erfassung von Schwingungsmessdaten an einer zu vermessenden Einrichtung, insbesondere an einem Container, mit wenigstens einem Energiespeicher zur autarken Energieversorgung der Schwingungsmessvorrichtung, insbesondere über einen energieautarken Zeitraum von wenigstens sechs Monaten oder optional auch wenigstens fünf Jahren, und mit wenigstens einer Energieaufnahmeeinheit eingerichtet zum Einspeisen von aus der Umgebung geernteter Energie in den Energiespeicher, und ferner mit wenigstens einem an den Energiespeicher gekoppelten Kommunikationsmodul eingerichtet zur energieautarken drahtlosen Transmission der Schwingungsmessdaten basierend auf wenigstens einem Kommunikationsprotokoll, insbesondere aus der Gruppe der LP-WAN (Low Power Wide Area Network)-Protokolle, insbesondere basierend auf SigFox und/oder NBIoT.
Erfindungsgemäß wird vorgeschlagen, dass die Schwingungsmessvorrichtung eingerichtet ist zur energieautarken Erfassung und Transmission der Schwingungsmessdaten in Form von Körperschwingungsmessdaten (Daten bezüglich Schwingungen bzw. Vibrationen von Körpern, insbesondere auch Körperschall) erfasst an einer Festkörperoberfläche der zu vermessenden Einrichtung, wobei die Schwingungsmessvorrichtung eine Recheneinheit aufweist und ferner eingerichtet ist zur energieautarken Auswertung der erfassten Körperschwingungsmessdaten in Hinblick auf wenigstens einen Systemzustand der zu vermessenden Einrichtung, insbesondere in Hinblick auf einen Systemzustand in einem von der Einrichtung umgrenzten Innenvolumen, insbesondere in Hinblick auf einen Füllstand von Flüssigkeit oder Feststoffen im Innenvolumen, insbesondere eingerichtet zur Auswertung ausschließlich basierend auf den Körperschwingungsmessdaten. Dies liefert einen hohen Grad an Autarkie bei der Überwachung der entsprechenden Einrichtung. Die Erfassung von Körperschwingungen kann dabei insbesondere als reaktives Erfassen in Reaktion auf externe Effekte/Ursachen für die Körperschwingungen durchgeführt werden.

Mittels der Schwingungsmessvorrichtung kann eine Erfassung von Erschütterungen erfolgen, beispielsweise beim Befüllen (Aufschlagimpulse) und/oder beim Öffnen eines Containers (insbesondere auch Vibrationen hervorgerufen durch Öffnen/Schließen einer Klappe des Containers). Diese Schwingungs- bzw. Vibrations-Messwert können zum Bestimmen des Füllstandes (Flüssigkeit und/oder Feststoffe) ausgewertet werden, insbesondere auch mittels selbstlernender Algorithmen.

Dabei kann die Diagnose optional bereits basierend auf einer Auswertung ausschließlich der Vibrationen/Schwingungsemissionen erfolgen, welche bei manueller Betätigung des Containers und/oder beim Befüllen mit Fluiden oder Feststoffen auftreten. Eine aktive Erzeugung bestimmter Schwingungsmuster oder Vibrationen ist nicht erforderlich. Anders ausgedrückt: Die Schwingungsmessvorrichtung kann passiv hinsichtlich der Schwingungsausbreitung bleiben. Dies reduziert die Komplexität der Mess-Anordnung und ermöglicht auch einen hohen Grad an Autarkie. Da die Messung auf einer von außen erzeugten Schwingung bzw. Vibration beruht, z.B. hervorgerufen durch Einwurf von festen Stoffen (z.B. Flaschen, Glas, Papier, Mischabfälle), kann das Verfahren ohne eigene aktive Anregung/Schwingungserzeugung durchgeführt werden. Die Schwingungsmessvorrichtung wird dabei lediglich zum Erfassen von Schwingungen bzw. Vibrationen und zur Transmission von Daten aktiv.

Insbesondere kann eine Messung von Stärke, Frequenz und/oder Dauer der Körperschwingungen bzw. der Vibrationen erfolgen. Ferner kann die Vorrichtung eingerichtet sein zum Erfassen der Bewegungen der Stoffe beim Befüllen des Behälters mit den Stoffen, insbesondere bei einer Montageposition der Vorrichtung auf einem Deckel des Containers. Wahlweise kann auch eine optische und/oder akustische Erfassungseinheit, insbesondere eine Kameraeinrichtung vorgesehen sein, insbesondere zum initialen, einmaligen Training von wenigstens einem selbstlernenden Algorithmus. Eine optische und/oder akustische Erfassung kann anwendungsspezifisch zusätzlich zur Erfassung der Schwingungsmessdaten vorgesehen sein.

Die ausgewerteten Daten können dann basierend auf einer möglichst energiearmen Kommunikationstechnik transmittiert werden, insbesondere zeitgesteuert und/oder ereignisgesteuert. Das genutzte Kommunikationsprotokoll kann insbesondere auf einem LoRaWAN (Long Range WAN)-Protokoll basieren.

Erfindungsgemäß kann auf energieintensive Arten der Messdatenerfassung verzichtet werden, und auch die Transmission kann auf energieoptimierte Weise erfolgen. Insbesondere die zwar akkurate, aber energieintensive Ultraschall-Technologie muss nicht verwendet werden. Unabhängig davon kann eine der bereits erprobten, akkuraten Messtechnologien zusätzlich oder z.B. zu Kalibrierzwecken oder beim Installieren und Inbetriebnahme der Schwingungsmessvorrichtung genutzt werden.

Als Schwingungsmessvorrichtung ist bevorzugt eine separat von irgendwelchen Hilfsmitteln funktionierende Vorrichtung zu verstehen, die eingerichtet ist, die Messdaten sowohl zu erfassen als auch auszuwerten und zu transmittieren. Als energieautark ist dabei eine Funktionsweise ohne Zufuhr von Energie von Dritten oder von weiteren Vorrichtungen zu verstehen. Dabei kann ein Ernten von Energie aus der Umgebung durch die Vorrichtung selbst erfolgen, insbesondere mittels Solarmodulen.

Als Körperschwingung ist dabei eine Schwingung, Vibration oder sonstige Bewegung eines Festkörpers zu verstehen (Aggregatzustand = fest). Eine Körperschwingung umfasst also keine durch akustischen Schall verursachte Schwingung von Fluiden. Eine Körperschwingung kann jedoch eine durch akustischen Schall verursachte Schwingung oder Vibration eines Festkörpers umfassen (Körperschall).

Als Körperschwingungsmessdaten sind die Körperschwingungen kennzeichnende Daten zu verstehen. Somit sind unter Körperschwingungsmessdaten auch jene Daten zu verstehen, welche aus den allgemein in der jeweiligen Anwendung auftretenden Vibrationen von Körpern und wahlweise auch der damit verbundenen Geräuschentwicklungen (Schallemission), welche auch eine entsprechende Körperschwingung verursachen kann, als Messdaten gewonnen und ausgewertet werden.

Als zu vermessende Einrichtung ist bevorzugt eine beliebige Einrichtung (insbesondere offener oder geschlossener Container) zur Aufnahme von Stoffen oder zur Anordnung von z.B. Maschinenelementen zu verstehen, die ein Innenvolumen umgrenzt, welches Innenvolumen auch ein gewisses Resonanzvolumen bilden kann.

Mittels des Kommunikationsmoduls kann eine Transmission der Körperschwingungsdaten über den autarken Zeitraum erfolgen, insbesondere zu vordefinierten Zeitpunkten, und/oder als Funktion von einem Energieinhalt des Akkumulators. Das Kommunikationsmodul kann eingerichtet sein zur Kommunikation basierend auf mehreren Protokollen, insbesondere zumindest umfassend SigFox und NBIoT. Das Kommunikationsmodul kann eingerichtet sein zur Nutzung wenigstens eines schmalbandigen drahtlosen Kommunikationsstandards, insbesondere mehrerer LP-WAN (Low Power Wide Area Network)-Standards. LP-WAN-Standards zeichnen sich durch eine geringe Bandbreite und einen geringen Stromverbrauch/-bedarf aus. Sigfox basiert auf LoRaWAN (Long Range WAN)-Technologie. NBIoT nutzt vorhandene Mobilfunk- Technologie, insbesondere LTE- Technologie. Die Sigfox-Technologie dient insbesondere der Übertragung von vergleichsweise geringen Datenmengen und wird bereits seit einiger Zeit für z.B. Module genutzt, welche den Standort von Versandcontainern angeben können. Es hat sich nun gezeigt, dass die Sigfox-Technologie auch im Zusammenhang mit der Erfassung und Verarbeitung bzw. Transmission von vergleichsweise komplexen Daten/Datenmengen genutzt werden kann, insbesondere indem mittels der Schwingungsmessvorrichtung eine Vorverarbeitung der Schwingungsrohdaten hinsichtlich einer Vorauswahl und wahlweise auch Datenkompression erfolgt.

Die Körperschwingungsmessdaten können in einem Innenvolumen der zu vermessenden Einrichtung hervorgerufen worden sein, insbesondere beim/durch Einwurf oder Einfüllen von Füllgut. Die dabei auftretenden Vibrationen breiten sich im Innenvolumen aus und werden auf die Wandung übertragen. Durch Erfassen von (Körper-)Schwingungen in der Wandung kann auf den Zustand im Innenvolumen rückgeschlossen werden. Eine entsprechende Korrelation kann insbesondere auch unter Zuhilfenahme selbstlernender Algorithmen optimiert werden.

Die Schwingungsmessvorrichtung weist wenigstens eine Energieaufnahmeeinheit (Harvestingmodul) eingerichtet zum Einspeisen von aus der Umgebung geernteter Energie in den Energiespeicher (Akkumulator) auf. Das Harvestingmodul weist bevorzugt wenigstens ein Modul aus der folgenden Gruppe auf: Solarmodul (umfassend wenigstens eine Solarzelle) eingerichtet zum Einspeisen von aus natürlicher und/oder künstlicher Lichtstrahlung geernteter Energie; piezoelektrisches Modul.

Als Systemzustand ist dabei bevorzugt ein Zustand aus der folgenden Gruppe zu verstehen: Betriebszustand (z.B. Volllastbetrieb, Teillastbetrieb, aus; offen, teilgeöffnet, geschlossen), Geräuschverhalten (normales erwartungsgemäßes Standard-Geräusch; erhöhte Geräuschemission), Füllstand (insbesondere leer, teilgefüllt, gefüllt bis zu einem vordefinierbaren Schwellwert, mehr als 3/4 gefüllt, voll), Energieversorgung. Der Systemzustand kann dabei auch durch mehrere Arten von diesen Zuständen charakterisiert sein: z.B. Betriebszustand (z.B. Container mit geöffneter Klappe), Füllstand, und/oder Geräuschverhalten. Beispielsweise kann am Container auch ein Sensor zur Erfassung der Stellung der Klappe vorgesehen sein, welcher Sensor in Kommunikation mit der Schwingungsmessvorrichtung steht oder darin integriert ist.

Der Füllstand kann sich auf einen Füllstand in einem von der zu vermessenden Einrichtung umgrenzten Innenvolumen beziehen, insbesondere auf einen Füllstand in einer vollständig hohlen Kavität. Die Einrichtung kann eine beliebige Geometrie aufweisen. Die Einrichtung kann aus beliebigem Material bestehen, beispielsweise mit metallischer Wandung oder mit Kunststoffwandung. Das Füllgut kann eine beliebige Zusammensetzung aufweisen und fest und/oder flüssig sein. In Einrichtungen, in welchen ausschließlich Fluide aufgenommen werden, kann eine Schwingung insbesondere dann erfasst werden, wenn eine externe Anregung erfolgt, z.B. durch das Öffnen oder Schließen eines Deckels bzw. Einfüllstutzens, oder auch kontrolliert durch einen ansteuerbaren Aktor (Schwingungsgeber).

Als SigFox-Kommunikationsprotokoll ist dabei ein Kommunikationsprotokoll auf Basis von Ultra-Schmalband-Technologie zu verstehen, auch LPWAN (Niedrigenergieweitverkehrnetzwerk) genannt, welches Funk-Konnektivität für das Internet der Dinge (IoT) ermöglicht, insbesondere unabhängig von bereits bestehenden Netzwerken.

Es hat sich nun gezeigt, dass eine Anwendung für diverse Arten von Einrichtungen möglich ist, insbesondere für Recycling-Container, Mulden-Behälter, Absetz- und Abrollcontainer, Überseecontainer, sei es jeweils mit oder ohne Deckel, mit oder ohne fest eingebauten Öffnungen. Ferner hat sich gezeigt, dass eine derartige Vorrichtung vergleichsweise kostengünstig realisiert werden kann.

Die Recheneinheit kann dabei separat vorgesehen sein (in der Art eines nachgeschalteten Rechnersystems, insbesondere entkoppelt vom Erfassen der Messdaten), oder in eine Sensorik zum Erfassen der Messdaten integriert sein.

Der Begriff "reaktives Erfassen" wurde hier bewusst in Abgrenzung zur Erfassung von aktiv künstlich (insbesondere gemäß vordefinierter Muster) generierter Körperschwingungen gewählt. Die energieautarke Vorrichtung ist erfindungsgemäß eingerichtet, die Erfassung und Auswertung unabhängig von irgendwelchen künstlich aktiv erregten, induzierten Vibrationen oder Schwingungen auszuführen. Eine Energiezufuhr zum aktiven, künstlichen Generieren von Schwingungen bzw. Schall ist erfindungsgemäß daher nicht erforderlich.

Die erfindungsgemäße Vorrichtung bzw. das erfindungsgemäße Verfahren kann auch wenigstens einen akustischen Schwingungssensor aufweisen, bzw. kann eine Erfassung und Auswertung akustischer Schwingungen (Schall) umfassen. Diese zusätzliche Datengrundlage kann das Auswerten der Schwingungen noch exakter gestalten, oder kann auch den Umfang der Analyse erweitern.

Insbesondere im Zusammenhang mit einer Kalibrierung oder zur Plausibilitätsprüfung können dabei auch Vergleichsmessungen vorgenommen werden, insbesondere Ultraschallmessungen bzw. -auswertungen. Hierfür wird bevorzugt ein kurzes Zeitintervall ganz am Anfang der Inbetriebnahme genutzt. Insbesondere kann dank solcher Vergleichsmessungen ein neuronales Netzwerk trainiert werden, insbesondere in der Art eines einmaligen Trainierens von Algorithmen, am Anfang in einer Datalogger-Phase.

Gemäß einem Ausführungsbeispiel weist die Schwingungsmessvorrichtung eine als Körperschwingungs-Kupplung ausgebildete mechanische Schnittstelle (ausgebildet zur ortsfesten Montage bzw. zum ortsfesten Kuppeln an die Einrichtung bzw. an eine dafür vorgesehene Befestigungsstelle der Einrichtung) auf und ist eingerichtet zur Erfassung der Körperschwingungsmessdaten auf nicht-optische Weise (durch Festkörperkontakt bzw. durch die aufgrund von Festkörperkontakt übertragenen Schwingungen, Vibrationen), insbesondere ausschließlich auf nicht-optische Weise über die Körperschwingungs-Kupplung bzw. entsprechende, in Verbindung mit der Körperschwingungs-Kupplung stehende Sensorik, insbesondere in einer Montageposition außen an der Festkörperoberfläche, beispielsweise an einer Behälter- oder Container- oder Maschinengehäusewandung. Dies liefert auch Vorteile hinsichtlich des Anwendungsspektrums und der Montagemöglichkeiten.

Als Körperschwingungs-Kupplung ist bevorzugt eine Kupplung eingerichtet zum Weiterleiten von Körperschwingungen zu verstehen, also eine Kupplung, die eine Befestigung weitgehend ohne Dämpfung oder Federung ermöglicht. Die Körperschwingungs-Kupplung ist eingerichtet, in Festkörperkontakt mit der zu vermessenden Einrichtung zu stehen. Dabei kann die Schwingungsmessvorrichtung wenigstens einen mit der Körperschwingungs-Kupplung verbundenen Körperschwingungssensor aufweisen, insbesondere in starrer Anordnung, wahlweise integriert in die Körperschwingungs-Kupplung. Dies ermöglicht eine Erfassung bei minimaler Dissipation bzw. bei minimierten Verlusten, bei minimierter Dämpfung. Dies kann die Exaktheit steigern oder auch das Anwendungsgebiet erweitern, insbesondere auch hinsichtlich schwacher Vibrationen bzw. hinsichtlich Einrichtungen/Containern, die z.B. nur mit Materialien mit vergleichsweise kleiner Masse befüllt werden (z.B. Papier, Karton).

Gemäß einem Ausführungsbeispiel ist die Schwingungsmessvorrichtung eingerichtet zur Erfassung von Körperschwingungsmessdaten mittels der Körperschwingungs-Kupplung in einer festkörperkontaktierenden Anordnung außen an der Einrichtung, außerhalb von einem von der Einrichtung umgrenzten Innenvolumen, insbesondere ohne Sicht ins Innenvolumen, insbesondere an einer Wandung der Einrichtung. Dies liefert nicht zuletzt eine hohe Flexibilität hinsichtlich der Anordnung oder auch hinsichtlich der zu überwachenden Einrichtungen, z.B. auch von Maschinengehäusen.

Gemäß einem Ausführungsbeispiel weist die Körperschwingungs-Kupplung eine Körperschwingungsleitfläche eingerichtet zur stoffschlüssigen, insbesondere adhäsiven Fixierung an der Einrichtung auf. Dies kann die Schnittstelle optimieren. Gemäß einem Ausführungsbeispiel weist die Körperschwingungs-Kupplung Befestigungsmittel eingerichtet zur reversiblen form- und/oder kraftschlüssigen Montage an der Einrichtung auf. Auch dies kann die Schnittstelle zur Einrichtung optimieren.

Gemäß einem Ausführungsbeispiel umfasst die Körperschwingungs-Kupplung Befestigungsmittel umfassend wenigstens eine Schraubverbindung. Dies liefert eine robuste Verbindung und große Freiheitsgrade hinsichtlich der Fixierung an der Einrichtung.
Gemäß einem Ausführungsbeispiel umfasst die Körperschwingungs-Kupplung Befestigungsmittel umfassend wenigstens einen Niet, insbesondere Blindniet (s.g. Popniete). Es hat sich gezeigt, dass ein Niet auf einfache Weise eine sehr beständige, flächig kontaktierende Befestigung sicherstellen kann. Diese Art der Befestigung hat zudem den Vorteil, dass Körperschwingungen kaum bzw. nicht spürbar dissipiert werden.
Gemäß einem Ausführungsbeispiel umfasst die Körperschwingungs-Kupplung Befestigungsmittel umfassend wenigstens eine irreversible oder reversible Klebeverbindung. Es hat sich gezeigt, dass eine Verklebung sehr einfach durchzuführen ist. Eine Verklebung liefert insbesondere auch den Vorteil, dass die Befestigungsstelle weitgehend frei gewählt werden kann, und dass keine Bohrungen oder dergleichen an der Einrichtung erforderlich sind.

Gemäß einem Ausführungsbeispiel weist die Körperschwingungs-Kupplung eine zumindest abschnittsweise plane, ebene Körperschwingungsleitfläche eingerichtet zur flächigen Aufnahme und Weiterleitung von Körperschwingungen der Einrichtung auf, insbesondere geometrisch korrespondierend zur Einrichtung.
Gemäß einem Ausführungsbeispiel weist die Körperschwingungs-Kupplung eine Körperschwingungsleitfläche eingerichtet zur flächigen Kontaktierung der Einrichtung auf. Dies ermöglicht jeweils eine zweckdienliche Kupplung. Gemäß einem Ausführungsbeispiel ist die Körperschwingungsleitfläche starr mit wenigstens einem Befestigungsmittel der Körperschwingungs-Kupplung verbunden. Dies kann die Aufnahme und Weiterleitung der Schwingungen optimieren.

Bezüglich der Art der Befestigung ist erwähnenswert, dass es je nach Art der zu vermessenden Einrichtung bevorzugte Varianten gibt. Es hat sich gezeigt, dass eine messtechnische Messung und Auswertung weitgehend unabhängig von der Art der Befestigung erfolgen kann, insbesondere da die Auswertung auf Differenzmesswerte bzw. relative Veränderungen fokussiert werden kann. Irgendwelche Einflüsse der Befestigungsweise, z.B. dämpfende Effekte bei einer Verklebung, können dann mehr oder weniger ignoriert werden; rechnerisch brauchen derartige Effekte nicht notwendigerweise beachtet werden, wenn die Auswertung auf eine zeitliche Veränderung der Messwerte fokussiert werden kann.

Gemäß einem Ausführungsbeispiel ist die Schwingungsmessvorrichtung eingerichtet zur energieautarken Erfassung und Auswertung von Körperschwingungsmessdaten aus Schwingungen bzw. Vibrationen der Einrichtung, insbesondere aus Vibrationen in Bezug auf wenigstens zwei Raumachsen, bevorzugt aus Vibrationen in Bezug auf alle drei Raumachsen. Dies kann auch den Umfang der Messung optimieren.

Gemäß einem Ausführungsbeispiel ist die Körperschwingungs-Kupplung eingerichtet zur Erfassung der Körperschwingungsmessdaten aus Vibrationen in Bezug auf wenigstens zwei Raumachsen, bevorzugt aus Vibrationen in Bezug auf alle drei Raumachsen, auf nicht-optische Weise über die Körperschwingungs-Kupplung und wenigstens einen mit der Körperschwingungs-Kupplung starr verbundenen Körperschwingungssensor, insbesondere einen Körperschwingungssensor mit Sensitivität in allen drei Raumachsen, insbesondere mikroelektromechanischen (MEMS-basierten) Körperschwingungssensor. Dies liefert nicht zuletzt messtechnische Vorteile. Die Sensitivität in Bezug auf alle drei Raumachsen hat auch den Vorteil, dass messtechnische Redundanz nicht notwendigerweise erforderlich ist. Dies ermöglicht auch Robustheit und Kosteneffizienz. Der Körperschwingungssensor kann dabei z.B. mittels starrer, nicht dämpfender Verbindungsmittel oder Konnektoren mit der Körperschwingungs-Kupplung verbunden oder darin integriert bzw. eingebettet sein.

Gemäß einem Ausführungsbeispiel weist die Schwingungsmessvorrichtung wenigstens einen Körperschwingungssensor, insbesondere ein Accelerometer auf, insbesondere in relativer Anordnung zur Körperschwingungs-Kupplung bzw. in starrer relativer Anordnung zur Körperschwingungsleitfläche, insbesondere gekoppelt mittels eines starren Verbindungselements (insbesondere mit minimierter Dämpfung, z.B. ein metallisches Verbindungselement).
Gemäß einem Ausführungsbeispiel weist die Schwingungsmessvorrichtung wenigstens einen Körperschwingungssensor, insbesondere ein Accelerometer eingerichtet zur Erfassung der Körperschwingungsmessdaten in Bezug auf wenigstens zwei Raumachsen, bevorzugt in Bezug auf alle drei Raumachsen auf. Das Accelerometer muss dabei nicht notwendigerweise in einer bestimmten Relativposition im Sensor oder relativ zur Montageposition bzw. Kupplungsstelle bzw. Befestigungsstelle angeordnet sein; wahlweise kann eine entsprechende Optimierung erfolgen, je nach Anwendungsfall. Ebenso muss das Accelerometer nicht auf vordefinierte Weise in den Sensor eingebettet sein. Auch müssen nicht notwendigerweise Vorkehrungen zur Vermeidung von Abdämpfung getroffen werden. Diese Vorteile ergeben sich insbesondere dadurch, dass die Auswertung auf eine zeitliche Veränderung der Messwerte fokussiert werden kann, also auf eine Analyse von zeitlichen Änderungen und Differenzmesswerten. Das Zeitintervall ist dabei nicht fest vorgegeben, es kann sich auf einen einzelnen Befüllvorgang beziehen, oder aber auch auf einen Zeitraum von mehreren Stunden, Tagen, Wochen oder Monaten.

Als Accelerometer bzw. Beschleunigungssensor können insbesondere vorgesehen sein: mikroelektromechanische (MEMS-basierte) Sensoren; piezoelektrische Sensoren; oder eine Kombination daraus. Es hat sich gezeigt, dass MEMS-basierte Sensoren besondere Vorteile liefern, insbesondere hinsichtlich Energiebedarf und breitem Spektrum erfassbarer Schwingungen, nicht zuletzt auch hinsichtlich Kosten.

Gemäß einem Ausführungsbeispiel weist die Schwingungsmessvorrichtung wenigstens einen Körperschwingungssensor umfassend eine Schallwandlungseinheit, insbesondere MEMS-Mikrofon auf. Anders ausgedrückt: Es kann ferner auch eine Schallwandlungseinheit bezüglich akustischer Schwingungen vorgesehen sein. Dies kann den Umfang der Analyse optional erweitern. Insbesondere können dadurch Plausibilitätsprüfungen erleichtert oder Störgeräusche herausgerechnet werden.

Gemäß einem Ausführungsbeispiel umfasst die Energieaufnahmeeinheit wenigstens ein Solarmodul und/oder wenigstens ein piezoelektrisches Modul. Hierdurch kann das Einspeisen von Energie auch durch Licht aus der Umgebung oder z.B. bei Relativbewegungen erfolgen.
Gemäß einem Ausführungsbeispiel ist die Schwingungsmessvorrichtung, insbesondere die Recheneinheit eingerichtet, die Art und Weise der Transmission, insbesondere Zeitpunkte für die Transmission, in Abhängigkeit vom Energieinhalt des Energiespeichers und/oder vom Energiefluss in den Energiespeicher vorzugeben. Dies kann den Autarkie-Grad weiter erhöhen. Insbesondere kann die Energieversorgung über einen längeren Zeitraum sichergestellt werden. Dabei kann auch eine Eingangs-/Ausgangsrechnung erfolgen, insbesondere in der Art einer Energiebilanz.

Gemäß einem Ausführungsbeispiel ist die Recheneinheit eingerichtet, ein Transmissionsintervall basierend auf der mittels der Energieaufnahmeeinheit bereitgestellten Energie und/oder basierend auf einem Ladezustand des Energiespeichers zu definieren. Dies ermöglicht einen ressourcenschonenden Umgang mit der verfügbaren Energie. Als Ladezustand ist dabei ein energetischer Zustand des Energiespeichers zu verstehen, wobei der Ladezustand beispielsweise basierend auf einer Unterteilung gemäß der folgenden Gruppe definiert wird: leer, Ladezustand mindestens ausreichend für Transmission, Ladezustand mindestens ausreichend für Erfassung und/oder Auswertung, Ladezustand mindestens ausreichend für Wartung (connectable), voll.

Gemäß einem Ausführungsbeispiel weist die Schwingungsmessvorrichtung einen Lichtsensor auf und ist eingerichtet, die mittels der Energieaufnahmeeinheit bereitgestellte Energiemenge bzw. den Energiefluss in den Energiespeicher zu quantifizieren. Dies erleichtert das Einstellen und Optimieren des Betriebszustandes der Schwingungsmessvorrichtung, auch in Abhängigkeit aktueller Umwelteinflüsse.
Gemäß einem Ausführungsbeispiel ist die Recheneinheit eingerichtet, ein/das Transmissionsintervall anzupassen, sobald sich die am Energiespeicher anliegende Spannung ändert, insbesondere indem über den Abstand zu einer vordefinierten/vordefinierbaren Zielspannung eine Änderungsrate für das Transmissionsintervall vorgegeben wird. Dies optimiert die Nutzung der verfügbaren Energie und die Betriebsweise als Funktion der verfügbaren Energie.
Gemäß einem Ausführungsbeispiel ist die Schwingungsmessvorrichtung eingerichtet, in einen energiebedarfsreduzierten (bzw. energiebedarfsminimierten) Tiefschlafmodus zu schalten oder die Transmission und/oder Erfassung zumindest auszusetzen, wenn mittels der Energieaufnahmeeinheit keine Energie bereitgestellt wird. Dies ermöglicht energetische Optimierungen. Als Tiefschlafmodus kann dabei z.B. auch ein stand by-Zustand verstanden werden.
Gemäß einem Ausführungsbeispiel ist die Recheneinheit eingerichtet, basierend auf einer Ladungsmessung, insbesondere mittels Coulomb-Counter, eine Eingangs-/Ausgangsrechnung in der Art einer Energiebilanz am Energiespeicher durchzuführen. Auch dies ermöglicht energetische Optimierungen, und erhöht dadurch den Grad der Autarkie.

Das Transmissionsintervall (Advertisement Interval, AI) muss nicht fest definiert sein, sondern kann iterativ an die mittels der Energieaufnahmeeinheit bzw. des Energiespeichers bereitgestellte Energie (Energieinhalt) angepasst werden. Diesbezüglich kann auch ein Lichtsensor genutzt werden, insbesondere um die Energie zu messen, die in der Energieaufnahmeeinheit produziert wird. Mittels eines ADC-Wandler kann die am Energiespeicher anliegende Spannung gemessen werden, woraus der Ladezustand/Energieinhalt ermittelt werden kann. Das AI kann angepasst (verkürzt bzw. verlängert) werden, wenn sich die Spannung ändert. Über den Abstand zur Zielspannung kann eine Änderungsrate vorgegeben werden, mit welcher das AI angepasst wird. Für den Fall, dass keine Energie produziert wird (z.B. Dunkelheit), kann die Schwingungsmessvorrichtung in einen Tiefschlafmodus versetzt werden, oder zumindest kann die Transmission ausgesetzt werden, insbesondere bis zu einem Zeitpunkt, zu welchem wieder Energie in den Energiespeicher eingespeist wird.

Gemäß einem Ausführungsbeispiel ist die Schwingungsmessvorrichtung eingerichtet, die Transmission in einem energiebedarfsoptimierten, als "non-connectable" definierten Zustand (aktiver Zustand ohne Wartungsmöglichkeit) vorzunehmen (bzw. ein entsprechendes Signal zu transmittieren).
Gemäß einem Ausführungsbeispiel ist die Schwingungsmessvorrichtung eingerichtet, zum Konfigurieren in einen "connectable"-Zustand zu schalten (Zustand mit Wartungsmöglichkeit), insbesondere in Abhängigkeit eines aktuellen Energieinhaltes der Energieaufnahmeeinheit, insbesondere aus einem Tiefschlafmodus heraus. Gemäß einem Ausführungsbeispiel umfasst die Schwingungsmessvorrichtung einen Lichtsensor und ist eingerichtet, bei Bestrahlung größer einem vordefinierten/vordefinierbaren Schwellwert in einen "connectable"-Zustand zu schalten, insbesondere für einen vordefinierten Zeitraum, insbesondere in Abhängigkeit eines aktuellen Energieflusses aus der Energieaufnahmeeinheit.

Gemäß einem Ausführungsbeispiel ist die Schwingungsmessvorrichtung eingerichtet, in Reaktion auf wenigstens einen äußeren Einfluss aus einem Tiefschlafmodus in einen "connectable"-Zustand (Zustand mit Wartungsmöglichkeit) zu schalten, wobei der äußere Einfluss insbesondere zumindest aus der folgenden Gruppe definiert/definierbar ist: berührungslose Aktivierung durch ein magnetisches Feld, NFC (Nahfeldkommunikations)-Verbindung. Dies ermöglicht jeweils auch einen optimierten Energiehaushalt.

Die Schwingungsmessvorrichtung sendet/transmittiert das entsprechende Signal (Advertisement) insbesondere in einem als "non-connectable" definierten Zustand. Falls die Schwingungsmessvorrichtung konfiguriert werden soll, also in den "connectable"-Zustand versetzt werden soll, in welchem Zustand ein höherer Energiebedarf vorliegt, kann der Lichtsensor mittels einer künstlichen Energiequelle bestrahlt werden, z.B. mittels der Taschenlampe eines Smartphone. Erst wenn eine definierte Beleuchtungsgrenze überschritten wird, wird die Schwingungsmessvorrichtung in den "connectable"-Zustand versetzt und verbleibt in diesem Zustand, z.B. für eine Minute oder so lange, wie ein Gerät damit verbunden ist.

Als Zustand der Schwingungsmessvorrichtung ist dabei ein Zustand zu verstehen, welcher einstellbar ist und ausschlaggebend für das einstellbare Betriebsverhalten der Schwingungsmessvorrichtung sein kann (insbesondere in Abhängigkeit des Ladezustandes), wobei der Zustand der Schwingungsmessvorrichtung beispielsweise basierend auf einer Unterteilung gemäß der folgenden Gruppe definiert wird: aus, Tiefschlafmodus, "non-connectable", "connectable". Im "non-connectable- oder "connectable"-Modus kann die Schwingungsmessvorrichtung jeweils eingerichtet sein bzw. einstellbar sein für wenigstens einen der folgenden Schritte: Erfassen, Auswerten, Transmission. Je nach gewähltem Zustand kann ein Energiebedarfszustand eingestellt werden, welcher Energiebedarfszustand eine Vorgabe für die Art und Weise der Einspeisung von Energie und/oder der Art und Weise der Schritte Erfassen, Auswerten und/oder Transmission sein kann, jeweils einstellbar mittels der Recheneinheit bzw. mittels eines entsprechenden Computerprogrammproduktes oder einer entsprechenden Steuerungseinheit. Beispielsweise werden für die Füllstandsmessung wenigstens drei Energiebedarfszustände definiert, und der (Betriebs-)Zustand der Schwingungsmessvorrichtung ist dabei einstellbar in Abhängigkeit des jeweiligen Ladezustandes. So kann vermieden werden, dass der Energiespeicher unvorteilhaft entladen wird für Messungen/Transmissionen, die eventuell gar nicht erforderlich sind. Dies steigert wiederum die Autarkie.

ITEM1 Zumindest eine der zuvor genannten Aufgaben wird auch gelöst durch eine energieautarke Schwingungsmessvorrichtung eingerichtet zur energieautarken Erfassung von Schwingungsmessdaten an einem Container, mit einem Energiespeicher zur autarken Energieversorgung der Schwingungsmessvorrichtung über einen energieautarken Zeitraum von wenigstens sechs Monaten oder sogar mehreren Jahren, und mit einer Energieaufnahmeeinheit eingerichtet zum Einspeisen von aus der Umgebung geernteter Energie in den Energiespeicher, und ferner mit einem an den Energiespeicher gekoppelten Kommunikationsmodul eingerichtet zur energieautarken drahtlosen Transmission der Schwingungsmessdaten basierend auf wenigstens einem Kommunikationsprotokoll aus der Gruppe der LP-WAN-Protokolle; wobei die Schwingungsmessvorrichtung eingerichtet ist zur energieautarken Erfassung und Transmission der Schwingungsmessdaten in Form von Körperschwingungsmessdaten erfasst an einer Festkörperoberfläche der zu vermessenden Einrichtung, wobei die Schwingungsmessvorrichtung eine Recheneinheit aufweist und ferner eingerichtet ist zur energieautarken Auswertung der erfassten Körperschwingungsmessdaten in Hinblick auf einen Füllstand von Flüssigkeit oder Feststoffen in einem von der Einrichtung umgrenzten Innenvolumen, insbesondere ausschließlich basierend auf den Körperschwingungsmessdaten, wobei die Schwingungsmessvorrichtung wenigstens einen Körperschwingungssensor, insbesondere ein Accelerometer aufweist und eingerichtet ist zur Erfassung der Körperschwingungsmessdaten aus Schwingungen des Containers in Bezug auf wenigstens zwei Raumachsen x, y, z, bevorzugt aus Schwingungen in Bezug auf alle drei Raumachsen, auf nicht-optische Weise, wobei die Schwingungsmessvorrichtung, insbesondere die Recheneinheit bevorzugt ferner eingerichtet ist, die Art und Weise der Transmission, insbesondere Zeitpunkte für die Transmission und/oder ein Transmissionsintervall, in Abhängigkeit vom Energieinhalt des Energiespeichers und/oder vom Energiefluss in den Energiespeicher zu definieren. Dies liefert zahlreiche zuvor genannte Vorteile.

Zumindest eine der zuvor genannten Aufgaben wird wie erwähnt auch gelöst durch eine Einrichtung, insbesondere einen Container, mit wenigstens einer daran befestigten energieautarken, zuvor beschriebenen Schwingungsmessvorrichtung, wobei die Schwingungsmessvorrichtung außen an einer Wandung der Einrichtung befestigt ist, insbesondere ohne Sichtkontakt in ein von der Wandung umgrenztes Innenvolumen. Dies liefert zuvor genannte Vorteile. Insbesondere können die Einrichtungen selbstständig eine Dienstleistung anfordern, z.B. ein Entleeren oder eine Diagnose oder Reparatur. Dies reduziert nicht zuletzt den Wartungsaufwand. Eine jeweils vorteilhafteste Position an der Außenseite der Einrichtung kann dabei individuell je nach Anwendungsfall gewählt werden.

Zumindest eine der zuvor genannten Aufgaben wird wie erwähnt auch gelöst durch ein Verfahren zum energieautarken Betreiben einer Schwingungsmessvorrichtung zum energieautarken Bereitstellen von Systemzustandsinformationen, insbesondere Füllstandsinformationen, bezüglich wenigstens eines von mehreren Systemzuständen einer zu vermessenden Einrichtung, insbesondere eines Containers, durch energieautarkes Erfassen von Körperschwingungsmessdaten an der Einrichtung, insbesondere mittels einer zuvor beschriebenen energieautarken Schwingungsmessvorrichtung, wobei eine autarke Energieversorgung für den Zweck des Bereitstellens der Systemzustandsinformationen vorgesehen wird, indem mittels wenigstens einer Energieaufnahmeeinheit der Schwingungsmessvorrichtung Energie aus der Umgebung geerntet und in wenigstens einen Energiespeicher der Schwingungsmessvorrichtung eingespeist wird, wobei mittels wenigstens eines an den Energiespeicher gekoppelten Kommunikationsmoduls der Schwingungsmessvorrichtung eine energieautarke drahtlose Transmission der Körperschwingungsmessdaten basierend auf wenigstens einem Kommunikationsprotokoll erfolgt, insbesondere aus der Gruppe der LP-WAN-Protokolle, insbesondere basierend auf SigFox und/oder NBIoT; wobei ein energieautarkes Erfassen der Körperschwingungsmessdaten an einer Festkörperoberfläche der zu vermessenden Einrichtung erfolgt, und wobei ferner ein energieautarkes Auswerten der erfassten Körperschwingungsmessdaten in Hinblick auf den wenigstens einen Systemzustand erfolgt, insbesondere in Hinblick auf einen Systemzustand in einem von der Einrichtung umgrenzten Innenvolumen, insbesondere in Hinblick auf einen Füllstand von Flüssigkeit oder Feststoffen im Innenvolumen, wobei die Körperschwingungsmessdaten energieautark drahtlos transmittiert werden. Dies liefert zuvor genannte Vorteile. Die Erfassung kann dabei auf nicht-optische Weise über eine mechanische Schnittstelle umfassend eine Körperschwingungs-Kupplung erfolgen, über welche die Schwingungen möglichst ungedämpft ohne Dissipation weitergeleitet werden können. Das Auswerten erfolgt insbesondere unter Beachtung einer zeitlichen Entwicklung (Differenzbildung), insbesondere auch mittels wenigstens eines selbstlernenden Algorithmus. Das Transmittieren erfolgt insbesondere basierend auf SigFox und/oder NBIoT.

Es hat sich gezeigt, dass die Auswertung basierend auf relativen Messwerten und Messwertänderungen bzw. Differenzbildung erfolgen kann. Dabei kann das System aus Einrichtung und Schwingungsmessvorrichtung als ein Schwingungssystem angesehen bzw. definiert werden, bei welchem Schwingungssystem die mechanische Schnittstelle zwischen der Einrichtung und der Schwingungsmessvorrichtung als eine Konstante betrachtet werden kann, also als eine hinsichtlich der Ausbreitung von Schwingungen bzw. (Körper-)Schall nicht weiter beachtliche Schnittstelle. Die Schwingungsmessvorrichtung kann mit der Einrichtung mitschwingen bzw. (Körper-)Schallwellen selbständig erfassen, so dass die Auswertung auf das Auswerten von zeitlichen Veränderungen, Relativwerten und Differenzbildung fokussiert werden kann. Absolute Messdaten können vernachlässigt werden oder im Vergleich zu relativen Messdaten zumindest nachrangig in die Auswertung einfließen.

Gemäß einer Ausführungsform werden die Körperschwingungsmessdaten auf nicht-optische Weise, insbesondere ausschließlich auf nicht-optische Weise erfasst, insbesondere mittels wenigstens eines Körperschwingungssensors der Schwingungsmessvorrichtung. Gemäß einer Ausführungsform werden die Körperschwingungsmessdaten mittels der Körperschwingungs-Kupplung in einer festkörperkontaktierenden Anordnung außen an der Einrichtung, außerhalb von einem von der Einrichtung umgrenzten Innenvolumen, insbesondere ohne Sicht ins Innenvolumen erfasst. Gemäß einer Ausführungsform werden die Körperschwingungsmessdaten mittels wenigstens eines in schwingungsleitender Verbindung an die Einrichtung gekoppelten Körperschwingungssensors erfasst. Dies liefert jeweils zuvor genannte Vorteile.

Gemäß einer Ausführungsform wird das energieautarke Erfassen in einem Zeitintervall von mindestens 1s durchgeführt. Dies ermöglicht auch die Erfassung eines zeitlichen Verlaufs.
Gemäß einer Ausführungsform wird das energieautarke Erfassen in einem Zeitintervall von maximal 10s durchgeführt. Gemäß einer Ausführungsform wird das energieautarke Erfassen in einzelnen Zeitintervallen von jeweils einigen Sekunden, insbesondere 1 bis 10s, über einen Zeitraum von mindestens 1 bis 6 Tagen, Wochen oder Monaten durchgeführt. Dies ermöglicht jeweils eine ressourcenschonende Betriebsweise. Dabei kann eine Differenzbildung auch dadurch erleichtert werden, dass die einzelnen Zeitintervalle nur wenige Sekunden auseinander liegen. Wird beispielsweise ein Container über eine Dauer von 30s mit Leergut (z.B. Flaschen) befüllt, kann die Erfassung z.B. in drei einzelnen Zeitintervallen von jeweils 3s in einem vergleichsweise kleinen zeitlichen Abstand von z.B. nur 5s erfolgen.
Gemäß einer Ausführungsform wird das energieautarke Erfassen situationsbedingt initiiert durch wenigstens einen Köperschwingungssensor der Schwingungsmessvorrichtung durchgeführt, in Reaktion auf situationsbedingt auftretende Körperschwingungen, insbesondere in Abhängigkeit eines überschrittenen Mindestschwellwertes für eine Schwingungsintensität. Dies stellt eine ressourcenschonende Betriebsweise sicher und verhindert auch die Erfassung von nur wenig aussagekräftigen Schwingungen.
Gemäß einer Ausführungsform umfasst das Auswerten eine Differenzbildung zwischen zweiten Körperschwingungsmessdaten und vorhergehenden, zeitlich früher erfassten ersten Körperschwingungsmessdaten. Dies liefert gute Belastbarkeit der Messwerte auch unter widrigen Bedingungen. Gemäß einer Ausführungsform wird ein Abklingverhalten der Körperschwingungen ausgewertet, insbesondere in einem Zeitintervall von mindestens 2.5s (Sekunden). Dies kann den Umfang der Analyse erweitern. Dabei kann mit einer Reaktionszeit des Körperschwingungssensors im Bereich von 2ms gerechnet werden, also einer Zeit, die für ein Schalten vom schlichten Überwachen (insbesondere standby-Modus) hinsichtlich einfallender Schwingungen in einen Betriebs-Modus zum Erfassen/Aufzeichnen der Schwingungsdaten erforderlich ist. Gemäß einer Ausführungsform erfolgt die energieautarke Transmission jeweils nach einem Zeitintervall, welches in Abhängigkeit des aktuellen Energieinhaltes des Energiespeichers definiert wird.
und/oder wobei die energieautarke Transmission erst dann erfolgt, wenn der Energieinhalt des Energiespeichers einen vordefinierbaren Mindestschwellwert übersteigt. Dies optimiert jeweils den Energiehaushalt.

Unabhängig vom für das Erfassen eingestellten Zeitraum/Zeitintervall kann eine permanente Überwachung hinsichtlich des Vorhandenseins von Schwingungen erfolgen, insbesondere durch eine Abtastung oder durch Abruf eines Körperschwingungssensors mehrere Male pro Sekunde. Wird eine Schwingung registriert, insbesondere oberhalb eines Schwellenwertes, wird die Erfassung/Aufzeichnung der Schwingung gestartet, insbesondere für die Dauer von 2.5s. Das energieautarke Erfassen kann über mehrere Jahre kontinuierlich erfolgen.

Gemäß einer Ausführungsform erfolgt das Erfassen mittels wenigstens eines Körperschwingungssensors, insbesondere eines Accelerometers eingerichtet zur Erfassung der Körperschwingungsmessdaten in Bezug auf wenigstens zwei Raumachsen, bevorzugt in Bezug auf alle drei Raumachsen. Gemäß einer Ausführungsform erfolgt das Erfassen ferner auch mittels einer Schallwandlungseinheit, insbesondere mittels MEMS-Mikrofon. Dies liefert zuvor genannte Vorteile.

Gemäß einer Ausführungsform erfolgt das Einspeisen der Energie in den Energiespeicher mittels eines Solarmoduls und/oder eines piezoelektrischen Moduls der Energieaufnahmeeinheit. Gemäß einer Ausführungsform werden die Art und Weise der Transmission, insbesondere Zeitpunkte für die Transmission, in Abhängigkeit vom Energieinhalt des Energiespeichers und/oder vom Energiefluss in den Energiespeicher vorgegeben, insbesondere mittels einer/der Recheneinheit oder Steuerungseinheit der Schwingungsmessvorrichtung. Dies liefert jeweils zuvor genannte Vorteile.

Gemäß einer Ausführungsform erfolgen das Auswerten und die Transmission in Abhängigkeit eines Energieinhaltes des Energiespeichers, indem basierend auf einer Ladungsmessung, insbesondere mittels Coulomb-Counter eingerichtet zur Datenerhebung und Datenbereitstellung für die oder in der Recheneinheit, eine Eingangs-/Ausgangsrechnung in der Art einer Energiebilanz am Energiespeicher erfolgt.
Gemäß einer Ausführungsform wird ein Transmissionsintervall basierend auf der mittels der Energieaufnahmeeinheit bereitgestellten Energie und/oder basierend auf einem Ladezustand des Energiespeichers definiert. Gemäß einer Ausführungsform wird die mittels der Energieaufnahmeeinheit bereitgestellte Energiemenge mittels eines Lichtsensors der Schwingungsmessvorrichtung quantifiziert. Gemäß einer Ausführungsform wird das Transmissionsintervall angepasst, sobald sich die am Energiespeicher anliegende Spannung ändert, insbesondere indem über den Abstand zu einer vordefinierten/vordefinierbaren Zielspannung eine Änderungsrate vorgegeben wird. Gemäß einer Ausführungsform schaltet die Schwingungsmessvorrichtung in einen energiebedarfsreduzierten Tiefschlafmodus oder setzt die Transmission und/oder Erfassung zumindest zeitweise aus, wenn mittels der Energieaufnahmeeinheit keine Energie bereitgestellt wird. Gemäß einer Ausführungsform wird basierend auf einer Ladungsmessung, insbesondere mittels Coulomb-Counter, eine Eingangs-/Ausgangsrechnung in der Art einer Energiebilanz am Energiespeicher durchgeführt. Dies liefert jeweils zuvor genannte Vorteile.

Diese Schritte können jeweils insbesondere mittels einer Recheneinheit oder Steuerungseinheit der Schwingungsmessvorrichtung vorgenommen werden.

Gemäß einer Ausführungsform erfolgt die Transmission in einem energiebedarfsoptimierten, als "non-connectable" definierten Zustand der Schwingungsmessvorrichtung. Gemäß einer Ausführungsform wird die Schwingungsmessvorrichtung zum Konfigurieren in einen "connectable"-Zustand geschaltet, insbesondere in Abhängigkeit eines aktuellen Energieinhaltes des Energiespeichers, insbesondere aus einem Tiefschlafmodus heraus. Gemäß einer Ausführungsform schaltet die Schwingungsmessvorrichtung bei Bestrahlung größer einem vordefinierten/vordefinierbaren Schwellwert in einen "connectable"-Zustand (bzw. wird geschaltet), insbesondere für einen vordefinierten Zeitraum, insbesondere in Abhängigkeit eines aktuellen Energieinhaltes des Energiespeichers. Gemäß einer Ausführungsform schaltet die Schwingungsmessvorrichtung in Reaktion auf wenigstens einen äußeren Einfluss aus einem Tiefschlafmodus in einen "connectable"-Zustand (bzw. wird geschaltet), wobei der äußere Einfluss insbesondere zumindest aus der folgenden Gruppe definiert wird: berührungslose Aktivierung durch ein magnetisches Feld, NFC-Verbindung. Dies liefert jeweils zuvor genannte Vorteile. Dabei kann die Schwingungsmessvorrichtung in Reaktion auf auftretende Schwingungen aus einem Tiefschlafmodus in einen Modus zum Erfassen der Schwingungen schalten. eine permanente Überwachung hinsichtlich einfallender Schwingungen ermöglicht das Aktivieren in Reaktion auf neu auftretende Schwingungen. Die Überwachung ist dabei unabhängig vom Schritt des Erfassens.

Zumindest eine der zuvor genannten Aufgaben wird wie erwähnt auch gelöst durch Verwendung wenigstens eines Körperschwingungssensors, insbesondere Accelerometers in einer energieautarken Schwingungsmessvorrichtung, insbesondere einer zuvor beschriebenen energieautarken Schwingungsmessvorrichtung, die mittels Befestigungsmitteln umfassend wenigstens eine Schraubverbindung und/oder wenigstens einen Niet, insbesondere Blindniet, und/oder wenigstens eine irreversible oder reversible Klebeverbindung in einer Anordnung außen an Einrichtung, insbesondere einem Container befestigt ist, zum Erfassen von Körperschwingungsmessdaten zum Auswerten eines Systemzustands der zu vermessenden Einrichtung. Dies liefert zuvor genannte Vorteile.

ITEM2 Zumindest eine der zuvor genannten Aufgaben wird auch gelöst durch ein Verfahren zum energieautarken Betreiben einer Schwingungsmessvorrichtung zum energieautarken Bereitstellen von Systemzustandsinformationen in Form von Füllstandsinformationen bezüglich eines Containers, durch energieautarkes Erfassen von Körperschwingungsmessdaten an der Einrichtung, insbesondere mittels einer zuvor beschriebenen energieautarken Schwingungsmessvorrichtung, wobei eine autarke Energieversorgung für den Zweck des Bereitstellens der Systemzustandsinformationen vorgesehen wird, indem mittels einer Energieaufnahmeeinheit der Schwingungsmessvorrichtung Energie aus der Umgebung geerntet und in einen Energiespeicher der Schwingungsmessvorrichtung eingespeist wird, wobei mittels eines Kommunikationsmoduls der Schwingungsmessvorrichtung eine energieautarke drahtlose Transmission der Körperschwingungsmessdaten basierend auf wenigstens einem Kommunikationsprotokoll aus der Gruppe der LP-WAN-Protokolle erfolgt; wobei ferner ein energieautarkes Erfassen der Körperschwingungsmessdaten an einer Festkörperoberfläche der zu vermessenden Einrichtung erfolgt, und ferner ein energieautarkes Auswerten der erfassten Körperschwingungsmessdaten in Hinblick auf den Füllstand von Flüssigkeit oder Feststoffen in einem vom Container umgrenzten Innenvolumen, wobei die Körperschwingungsmessdaten energieautark drahtlos transmittiert werden, wobei die Körperschwingungsmessdaten auf nicht-optische Weise, insbesondere ausschließlich auf nicht-optische Weise, mittels wenigstens eines Körperschwingungssensors der Schwingungsmessvorrichtung eingerichtet zur Erfassung der Körperschwingungsmessdaten in Bezug auf wenigstens zwei Raumachsen, bevorzugt in Bezug auf alle drei Raumachsen, außen am Container erfasst werden, wobei das energieautarke Erfassen in einzelnen Zeitintervallen über einen Zeitraum von mindestens 1 bis 6 Tagen, Wochen oder Monaten durchgeführt wird, wobei das Auswerten eine Differenzbildung zwischen zweiten Körperschwingungsmessdaten und vorhergehenden, zeitlich früher erfassten ersten Körperschwingungsmessdaten umfasst. Dies liefert zahlreiche zuvor genannte Vorteile.

Zumindest eine der zuvor genannten Aufgaben wird wie erwähnt auch gelöst durch ein Verfahren zum energieautarken Bereitstellen von Systemzustandsinformationen, insbesondere Füllstandsinformationen, bezüglich wenigstens eines von mehreren Systemzuständen einer zu vermessenden Einrichtung, insbesondere eines Containers, durch energieautarkes Auswerten von energieautark an der Einrichtung erfassten Körperschwingungsmessdaten, insbesondere mittels einer zuvor beschriebenen energieautarken Schwingungsmessvorrichtung, wobei ein energieautarkes Auswerten der erfassten Körperschwingungsmessdaten in Hinblick auf wenigstens einen Systemzustand in einem von der Einrichtung umgrenzten Innenvolumen ausschließlich basierend auf den Körperschwingungsmessdaten erfolgt, insbesondere in Hinblick auf einen Füllstand von Flüssigkeit oder Feststoffen im Innenvolumen, wobei das Auswerten eine Differenzbildung zwischen zweiten Körperschwingungsmessdaten und vorhergehenden, zeitlich früher erfassten ersten Körperschwingungsmessdaten umfasst. Dies liefert zuvor genannte Vorteile.

Dabei kann eine autarke Energieversorgung für den Zweck des Bereitstellens der Systemzustandsinformationen vorgesehen werden, indem mittels wenigstens einer Energieaufnahmeeinheit Energie aus der Umgebung geerntet und in wenigstens einen Energiespeicher eingespeist wird, wobei mittels wenigstens eines an den Energiespeicher gekoppelten Kommunikationsmoduls eine energieautarke drahtlose Transmission der Körperschwingungsmessdaten (basierend auf wenigstens einem Kommunikationsprotokoll) erfolgt; wobei ein energieautarkes Erfassen der Körperschwingungsmessdaten auf nicht-optische Weise über eine mechanische Schnittstelle mit einer Körperschwingungs-Kupplung erfolgt, welche eine Festkörperoberfläche der zu vermessenden Einrichtung kontaktiert.

Dabei können Referenzwerte auch mittels etablierter Messmethoden erfasst werden, insbesondere zwecks Hinterlegung erfasster Rohdaten zusammen mit den Referenzwerten. Dabei kann ein selbstlernender Algorithmus angewandt oder etabliert werden (Machine-Learning).

Die mittels der Recheneinheit durchgeführte Berechnung kann teilweise auf der Sensor-Ebene, teilweise auf einer Cloud-Ebene durchgeführt werden, also gesplittet werden hinsichtlich Datenvolumen und/oder Rechenaufgaben. Diese Teilung auf wenigstens zwei Ebenen ist vorteilhaft, um auch vergleichsweise große Datenmengen auf effiziente Weise mittels schmalbandiger Kommunikationsmethoden zu versenden.

Gemäß einer Ausführungsform erfolgt das energieautarke Auswerten basierend auf einer Differenzbildung zu vorhergehenden Körperschwingungsmessdaten jeweils als Funktion oder in Abhängigkeit oder zum Zeitpunkt einer neu erfassten (bzw. wahlweise auch aktiv initiierten) Schwingung bzw. Vibration, insbesondere basierend auf wenigstens einem selbstlernenden Algorithmus, insbesondere unter Bezugnahme auf wenigstens ein vordefiniertes, in einer Schwingungsdatenbank hinterlegtes Schwingungsmuster. Gemäß einer Ausführungsform wird ein Abklingverhalten der Körperschwingungen ausgewertet. Gemäß einer Ausführungsform erfolgt eine Aufteilung der Körperschallmessdaten und/oder eine Ausübung der Auswertung auf wenigstens zwei Ebenen, insbesondere umfassend eine Cloud-Ebene und eine Sensor-Ebene. Gemäß einer Ausführungsform erfolgt wenigstens eine Vergleichsmessung, insbesondere mittels Ultraschall bzw. basierend auf Ultraschallmesswerten, insbesondere zur Erfassung von Referenzwerten, insbesondere permanent bzw. simultan, wobei ein Vergleich mit den ausgewerteten Körperschwingungsmessdaten erfolgt, insbesondere simultan. Dies liefert jeweils zuvor genannte Vorteile.

Dabei kann nicht nur eine Differenzbildung erfolgen, sondern es kann auch eine Bezugnahme auf vordefinierte, abgespeicherte oder bereits zuvor gemessene (Schwingungs- bzw. Schall-)Muster erfolgen. Anders ausgedrückt: Die Körperschwingungen können auch basierend auf antrainierter Mustererkennung ausgewertet werden, insbesondere mittels selbstlernender Algorithmen.

Vergleichsmessungen, insbesondere Ultraschallmessungen bzw. -auswertungen erfolgen dabei bevorzugt allenfalls während eines kurzen Zeitintervalls ganz am Anfang, also nicht dauerhaft, insbesondere um Referenzwerte zu erzeugen, insbesondere zwecks Kalibrierung. Insbesondere kann dank der Vergleichsmessung ein neuronales Netzwerk trainiert werden, insbesondere in der Art eines einmaligen Trainierens von Algorithmen (genutzt/nutzbar durch die Recheneinheit), am Anfang in einer Datalogger-Phase, also weder beim finalen Produkt (Schwingungsmessvorrichtung) noch in dessen Standard-Betriebsmodus.

Zumindest eine der zuvor genannten Aufgaben wird auch gelöst durch ein Computerprogrammprodukt eingerichtet zum Steuern eines zuvor beschriebenen Verfahrens zum energieautarken Betreiben einer Schwingungsmessvorrichtung und/oder eingerichtet zum Ansteuern einer zuvor beschriebenen energieautarken Schwingungsmessvorrichtung, wobei das Computerprogrammprodukt insbesondere eingerichtet ist, das Erfassen, die Auswertung und/oder die Transmission der Körperschwingungsmessdaten in Abhängigkeit eines Energieinhalts und/oder Energieflusses zu steuern. Dies ermöglicht neben zuvor genannten Vorteilen auch eine sehr effektive Optimierung des Energiehaushaltes.

Zumindest eine der zuvor genannten Aufgaben wird auch gelöst durch ein Computerprogrammprodukt eingerichtet zum Auswerten von Körperschwingungsmessdaten erfasst mittels eines zuvor beschriebenen Verfahrens zum Bereitstellen von Systemzustandsinformationen und/oder mittels einer zuvor beschriebenen energieautarken Schwingungsmessvorrichtung, wobei das Computerprogrammprodukt insbesondere eingerichtet ist, das Auswerten der erfassten Körperschwingungsmessdaten in Hinblick auf wenigstens einen Systemzustand der zu vermessenden Einrichtung durchzuführen, indem aus einem zeitlichen Verlauf der Körperschwingungsmessdaten zwischen wenigstens einer ersten und einer zweiten Messung auf den Systemzustand geschlossen wird, insbesondere auf den Systemzustand in einem von der Einrichtung umgrenzten Innenvolumen, insbesondere in Hinblick auf einen Füllstand von Flüssigkeit oder Feststoffen im Innenvolumen. Dies ermöglicht neben zuvor genannten Vorteilen auch das Aufzeichnen einer Historie, und damit die Vorhersage eines erwartungsgemäßen Zeitpunktes, wann das Innenvolumen komplett gefüllt sein wird. Dies kann z.B. beim Betanken von Tanks vorteilhaft sein.

Das Computerprogrammprodukt kann beide zuvor beschriebenen Charakteristika umfassen, also eingerichtet sein sowohl zum Steuern des zuvor beschriebenen Verfahrens als auch zum Steuern der zuvor beschriebenen Vorrichtung. Dabei erfolgt bevorzugt eine Aufteilung der Daten und/oder der Auswertung auf wenigstens zwei Ebenen, insbesondere umfassend eine Cloud-Ebene und eine Sensor-Ebene. Hierdurch können vergleichsweise große Datenmengen auf effiziente Weise transmittiert werden, insbesondere auch mittels schmalbandiger Kommunikationsprotokolle.

Zumindest eine der zuvor genannten Aufgaben wird demnach auch gelöst durch einen Datenträger mit einem solchen darauf hinterlegten Computerprogrammprodukt, oder durch einen Computer oder ein Computersystem oder eine virtuelle Maschine oder wenigstens ein Hardwareelement damit.
Zumindest eine der zuvor genannten Aufgaben wird demnach auch gelöst durch ein Computerprogramm eingerichtet zum Bereitstellen der hier beschriebenen Daten bzw. der hier beschriebenen Verfahrensschritte.

Zumindest eine der zuvor genannten Aufgaben wird wie erwähnt auch gelöst durch Verwendung einer energieautarken Schwingungsmessvorrichtung, insbesondere einer zuvor beschriebenen energieautarken Schwingungsmessvorrichtung, zur energieautarken Erfassung von Körperschwingungsmessdaten an einer zu vermessenden Einrichtung in Form eines Containers, wobei sich die Schwingungsmessvorrichtung aus wenigstens einem durch eine Energieaufnahmeeinheit mit von aus der Umgebung geernteter Energie gespeisten Energiespeicher autark mit Energie versorgt und mittels wenigstens eines Kommunikationsmoduls energieautark drahtlos die Schwingungsmessdaten basierend auf wenigstens einem Kommunikationsprotokoll transmittiert, insbesondere aus der Gruppe der LP-WAN-Protokolle, insbesondere basierend auf SigFox und/oder NBIoT, und in einer Montageposition außen an einer Festkörperoberfläche des Containers die Körperschwingungsmessdaten auf nicht-optische Weise erfasst, und die erfassten Körperschwingungsmessdaten in Hinblick auf wenigstens einen Systemzustand der zu vermessenden Einrichtung auswertet und transmittiert, insbesondere in Hinblick auf einen Systemzustand in einem von der Einrichtung umgrenzten Innenvolumen, insbesondere in Hinblick auf einen Füllstand von Flüssigkeit oder Feststoffen im Innenvolumen. Hierdurch ergeben sich zuvor genannte Vorteile. Dabei werden z.B. Körperschwingungsmessdaten erfasst, die durch den Einwurf von Füllgut in den Container hervorgerufen wurden, also reaktive Körperschwingungsmessdaten (keine aktiv generierten Körperschwingungsmessdaten). Die Schwingungsmessvorrichtung ermöglicht daher ein reaktives Erfassen von Körperschwingungsmessdaten zum Zeitpunkt, zu welchem die Körperschwingungen hervorgerufen werden (reaktives Erfassen von Körperschwingungen, die durch externe Effekte hervorgerufen wurden).

Zumindest eine der zuvor genannten Aufgaben wird wie erwähnt auch gelöst durch Verwendung eines Computerprogrammproduktes und/oder einer Recheneinheit zum Auswerten von Körperschwingungsmessdaten erfasst an einer Einrichtung in Form eines Containers, mittels einer energieautarken Schwingungsmessvorrichtung, insbesondere einer zuvor beschriebenen energieautarken Schwingungsmessvorrichtung, indem aus einem zeitlichen Verlauf der Körperschwingungsmessdaten zwischen wenigstens einer ersten und einer zweiten Messung auf den Füllstand im Container geschlossen wird, insbesondere bei einem zuvor beschriebenen Verfahren, insbesondere zum Auswerten eines zeitlichen Verlaufs der Körperschwingungsmessdaten zwischen wenigstens einer ersten und einer zweiten Messung (Differenzbildung) und/oder zum Auswerten eines Abklingverhaltens. Hierdurch ergeben sich zuvor genannte Vorteile.

### KURZE BESCHREIBUNG DER FIGUREN

In den nachfolgenden Zeichnungsfiguren wird die Erfindung noch näher beschrieben, wobei für Bezugszeichen, die nicht explizit in einer jeweiligen Zeichnungsfigur beschrieben werden, auf die anderen Zeichnungsfiguren verwiesen wird. Es zeigen:
Fig. 1A, 1B; 2A, 2B; 3A, 3B jeweils in schematischer Darstellung in einer Seitenansicht eine Schwingungsmessvorrichtung bzw. deren Verwendung, an einem Container mit Deckel bzw. an einem offenen Container bzw. an einem Container ohne Klappe, jeweils gemäß einem Ausführungsbeispiel;
Fig. 4 in schematischer Darstellung ein Verfahrensschaubild betreffend einzelne Schritte eines Verfahrens gemäß einer Ausführungsform; und
Fig. 5 in schematischer Darstellung einen Zeitstrahl zur Veranschaulichung einer Betriebsweise einer Schwingungsmessvorrichtung bzw. eines damit durchgeführten Verfahrens, jeweils gemäß einem Ausführungsbeispiel.

### DETAILLIERTE BESCHREIBUNG DER FIGUREN

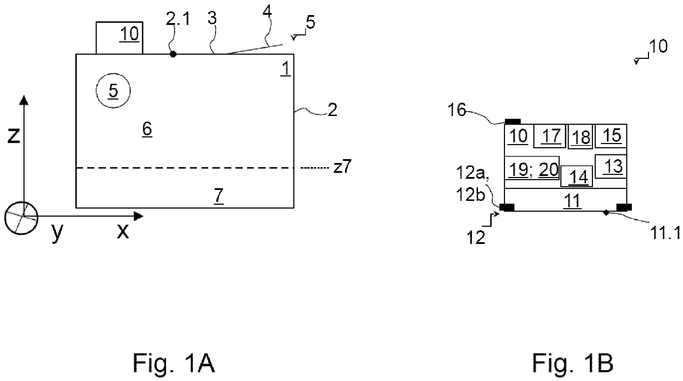

In der Fig. 1A ist eine zu vermessende Einrichtung 1, beispielsweise ein Container gezeigt, an welcher eine energieautarke Schwingungsmessvorrichtung 10 montiert ist. Eine Wandung 2 umgrenzt die Einrichtung und liefert mittels einer Festkörperoberfläche 2.1 ein Lager bzw. eine Befestigungsfläche für die Schwingungsmessvorrichtung 10. Die Wandung 2 bildet zumindest teilweise auch einen Deckel 3. Am Deckel 3 ist eine Klappe 4 vorgesehen, welche eine Öffnung 5 zum Innenvolumen 6 der Einrichtung freigibt. Die Einrichtung 1 ist gefüllt mit einer Füllung 7 bzw. mit Füllmaterial (Fluid und/oder Feststoffe) bei einer Füllhöhe z7 (Füllstand). Die Einrichtung 1 ruht auf dem Boden und erstreckt sich dreidimensional in Längsrichtung x, Breitenrichtung y und Höhenrichtung z. Die Bewegung der Klappe kann optional erfasst werden, beispielsweise optisch oder mittels Drehgelenksensor oder dergleichen. Wahlweise können auch akustische Sensoren vorgesehen sein.

Fig. 1B zeigt die Schwingungsmessvorrichtung 10 im Detail. Eine Körperschwingungs-Kupplung 11 weist eine Körperschwingungsleitfläche bzw. Kontaktfläche 11.1 auf, welche an der Wandung 2, 2.1 zur Anlage gebracht werden kann, indem Befestigungsmittel 12, umfassend mechanische Befestigungsmittel 12a (beispielsweise Schrauben) und/oder adhäsive Befestigungsmittel 12b, an die Einrichtung 1 bzw. Wandung 2 gekuppelt werden. Die Schwingungsmessvorrichtung 10 weist ferner wenigstens einen Schwingungssensor, insbesondere Accelerometer 13 und wenigstens einen Energiespeicher bzw. Akkumulator 17 auf. Eine Energieaufnahmeeinheit 15, insbesondere umfassend ein Solarmodul, kann Energie bereitstellen und den Energiespeicher 17 laden. Messdaten können in einem Datenspeicher 19 (Arbeitsspeicher und/oder Festspeicher) abgelegt oder zumindest zwischengelagert werden. Mittels eines Kommunikationsmoduls 14 kann eine Transmission von erfassten Schwingungsmessdaten erfolgen. Mittels eines Computerprogrammproduktes 20 kann dabei insbesondere auch eine Vorgabe bezüglich der Art und Weise der durchzuführenden Messungen und/oder der Datenübertragung erfolgen. Die Schwingungsmessvorrichtung 10 kann ferner eine Ladungsmesseinheit 15.1, insbesondere mit Coulomb-Counter, und/oder einen Lichtsensor 16 aufweisen. Die einzelnen Module oder Komponenten der Schwingungsmessvorrichtung 10 stehen dabei in Verbindung mit einer Recheneinheit und/oder Steuerungseinheit 18.

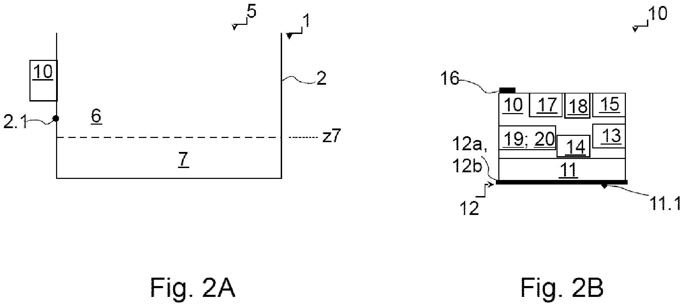

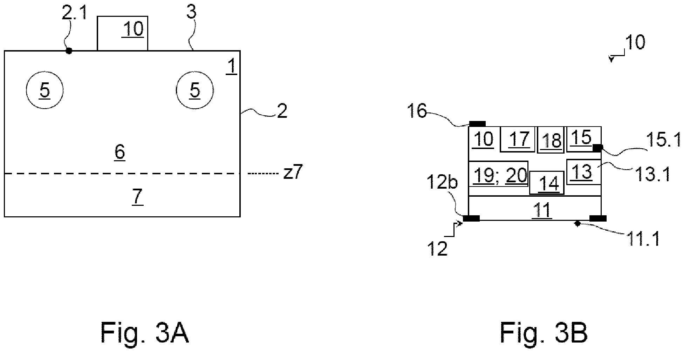

In der Fig. 2A ist eine Variante gezeigt, bei welcher die Schwingungsmessvorrichtung 10 an einer lateralen Wandung 2 einer offenen Einrichtung 1 angeordnet ist, z.B. an einem Recycling-Container, Mulden-Behälter, Absetz- oder Abrollcontainer. Fig. 2B zeigt eine Kontaktfläche 11.1, welche in Kombination mit Befestigungsmitteln 12a, 12b bereitgestellt wird. In der Fig. 3A, 3B ist eine Variante mit geschlossener Einrichtung 1 mit einer oder mehreren (Einwurf-)Öffnung 5 gezeigt (ohne Klappe).

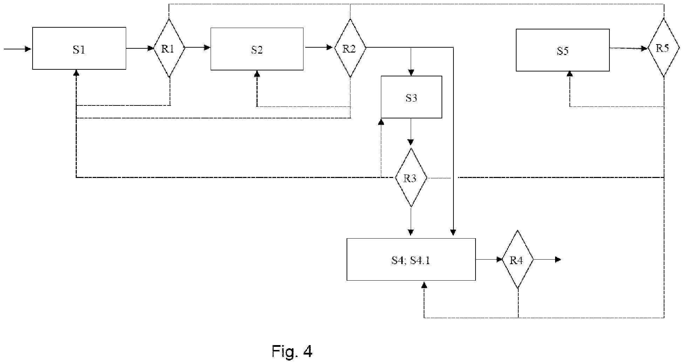

In Fig. 4 werden einzelne Schritte eines erfindungsgemäßen Verfahrens näher erläutert. In einem ersten Schritt S1 erfolgt ein Erfassen von Schwingungsmessdaten. Der Schritt S1 kann dabei auch ein Aktivieren der Schwingungsmessvorrichtung 10 umfassen, insbesondere aus einem Tiefschlafmodus, insbesondere in Reaktion auf neu einfallende Schwingungen. In einem ersten Regelungspunkt R1 kann insbesondere die Art und Weise der Erfassung geregelt werden, insbesondere hinsichtlich eines Zeitpunktes oder einer Zeitdauer der Erfassung, insbesondere in Abhängigkeit vom Energieinhalt oder Energiefluss. In einem Schritt S2 erfolgt ein Auswerten der Schwingungsmessdaten. In einem zweiten Regelungspunkt R2 kann insbesondere die Art und Weise der Auswertung geregelt werden, insbesondere hinsichtlich einer Differenz oder eines zeitlichen Verlaufs oder eines Abklingverhaltens. In einem dritten Schritt S3 erfolgt optional ein Archivieren der Schwingungsmessdaten. In einem dritten Regelungspunkt R3 kann insbesondere die Art und Weise der Abspeicherung geregelt werden, insbesondere hinsichtlich einer Auswahl der Daten, die abzuspeichern sind, beispielsweise um das zu transmittierende Datenvolumen möglichst gering zu halten. In einem vierten Schritt S4 erfolgt eine Transmission der Schwingungsmessdaten, insbesondere als Funktion des Energieinhaltes eines Energiespeichers der Schwingungsmessvorrichtung. In einem vierten Regelungspunkt R4 kann insbesondere die Art und Weise der Transmission geregelt werden, insbesondere hinsichtlich eines Zeitpunktes oder einer Dauer, insbesondere in Abhängigkeit vom Energieinhalt oder Energiefluss. Dabei kann in einem Schritt S4.1 ein Einstellen der Art und Weise der Transmission erfolgen, insbesondere mit Zeitvorgaben. In einem Schritt S5 erfolgt eine Energieeinspeisung (Laden) mittels wenigstens einer Energieaufnahmeeinheit (Solarmodul). Der Schritt S5 kann unabhängig von den weiteren Schritten erfolgen, oder wahlweise in Abhängigkeit davon, z.B. in zeitlicher Abhängigkeit. Ein fünfter Regelungspunkt R5 bezüglich der Art und Weise der Energieaufnahme und/oder Energieeinspeisung kann an die weiteren Regelungspunkte R1 bis R4 gekoppelt sein.

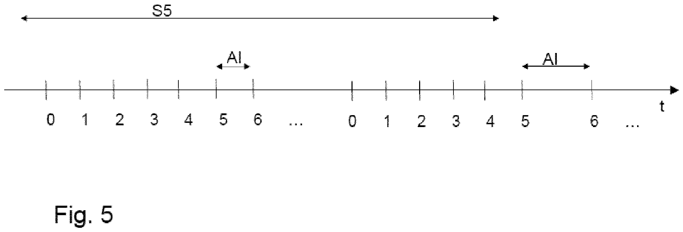

In Fig. 5 ist ein zeitlicher Verlauf (t) eines der hier beschriebenen Verfahren angedeutet. Zum Zeitpunkt 0 erfolgt insbesondere eine Schwingung bzw. deren Erfassung/Registrierung, beispielsweise begründet durch eine in einen Container eingeworfene Flasche, oder durch eine geöffnete oder zugeschlagene Klappe. Zum Zeitpunkt 1 erfolgt insbesondere ein Aktivieren der Schwingungsmessvorrichtung 10. Zum Zeitpunkt 2 erfolgt insbesondere ein Erfassen. Zum Zeitpunkt 3 erfolgt insbesondere ein Auswerten. Zum Zeitpunkt 4 erfolgt insbesondere ein Archivieren und/oder Auswählen von Teilmengen der erfassten Daten. Zum Zeitpunkt 5 erfolgt insbesondere eine Transmission, beispielsweise auch nur von einer Teilmenge der zu übertragenden Daten. Zum Zeitpunkt 6 erfolgt insbesondere eine weitere Transmission, beispielsweise auch nur von einer Teilmenge der zu übertragenden Daten, insbesondere in Abhängigkeit eines Energieinhaltes des Energiespeichers. Die jeweilige Regelung R1 bis R5 kann dabei unabhängig von den Zeitpunkten 1, 2, 3...erfolgen. Dabei kann ein Transmissionsintervall (AI Advertisement Interval) für einen jeweiligen Transmissionszeitpunkt definiert und eingehalten werden, welches sich unabhängig von den einzelnen Zeitpunkten 1, 2, ... z.B. über ein Zeitintervall von einigen Minuten erstreckt. In Fig. 5 sind beispielhaft zwei Transmissionsintervalle unterschiedlicher Länge dargestellt. Die Energieeinspeisung S5 erfolgt unabhängig von den einzelnen Zeitpunkten 1, 2, 3...

### Bezugszeichenliste

- 1: Einrichtung, insbesondere Container
- 2: Wandung
- 2.1: Festkörperoberfläche
- 3: Deckel
- 4: Klappe
- 5: Öffnung
- 6: Innenvolumen
- 7: Füllung bzw. Füllmaterial (Fluid und/oder Feststoffe)
- 10: energieautarke Schwingungsmessvorrichtung
- 11: Körperschwingungs-Kupplung mit mechanischer Schnittstelle
- 11.1: Körperschwingungsleitfläche bzw. Kontaktfläche
- 12: Befestigungsmittel
- 12a: mechanische Befestigungsmittel
- 12b: adhäsive Befestigungsmittel
- 13: Schwingungssensor, insbesondere Körperschwingungssensor, insbesondere Accelerometer
- 13.1: akustischer Sensor bzw. Schallwandlungseinheit (Schallwandler), insbesondere MEMS-Mikrofon
- 14: Kommunikationsmodul
- 15: Energieaufnahmeeinheit, insbesondere Solarmodul und/oder piezoelektrisches Modul
- 15.1: Ladungsmesseinheit, insbesondere Coulomb-Counter
- 16: Lichtsensor
- 17: Energiespeicher bzw. Akkumulator
- 18: Recheneinheit und/oder Steuerungseinheit
- 19: Datenspeicher, insbesondere mit Schwingungsdatenbank
- 20: Computerprogrammprodukt
- AI: Transmissionsintervall (Advertisement Interval)
- R1: erster Regelungspunkt, insbesondere bezüglich der Art und Weise der Erfassung
- R2: zweiter Regelungspunkt, insbesondere bezüglich der Art und Weise der Auswertung
- R3: dritter Regelungspunkt, insbesondere bezüglich der Art und Weise der Abspeicherung
- R4: vierter Regelungspunkt, insbesondere bezüglich der Art und Weise der Transmission
- R5: fünfter Regelungspunkt, insbesondere bezüglich Energieaufnahme und/oder -einspeisung
- S1: erster Schritt, insbesondere Erfassen von Schwingungsmessdaten
- S2: zweiter Schritt, insbesondere Auswertung der Schwingungsmessdaten
- S3: dritter Schritt, insbesondere Ablegen oder Archivieren der Schwingungsmessdaten
- S4: vierter Schritt, insbesondere Transmission der Schwingungsmessdaten
- S4.1: Einstellen der Art und Weise der Transmission
- S5: Energieeinspeisung (Laden) mittels Energieaufnahmeeinheit
- x, y, z: Längsrichtung, Breitenrichtung und Höhenrichtung
- z7: Füllstand bzw. Füllhöhe

## Patentansprüche

1. Energieautarke Schwingungsmessvorrichtung (10) eingerichtet zur energieautarken Erfassung von Schwingungsmessdaten an einer zu vermessenden Einrichtung (1), insbesondere an einem Container, mit einem Energiespeicher (17) zur autarken Energieversorgung der Schwingungsmessvorrichtung, insbesondere über einen energieautarken Zeitraum von wenigstens sechs Monaten, und mit einer Energieaufnahmeeinheit (15) eingerichtet zum Einspeisen von aus der Umgebung geernteter Energie in den Energiespeicher, und ferner mit einem an den Energiespeicher gekoppelten Kommunikationsmodul (14) eingerichtet zur energieautarken drahtlosen Transmission der Schwingungsmessdaten basierend auf wenigstens einem Kommunikationsprotokoll, insbesondere aus der Gruppe der LP-WAN-Protokolle, insbesondere basierend auf SigFox und/oder NBIoT; **dadurch gekennzeichnet, dass** die Schwingungsmessvorrichtung (10) eingerichtet ist zur energieautarken Erfassung und Transmission der Schwingungsmessdaten in Form von Körperschwingungsmessdaten erfasst an einer Festkörperoberfläche (2.1) der zu vermessenden Einrichtung (1), wobei die Schwingungsmessvorrichtung eine Recheneinheit (18) aufweist und ferner eingerichtet ist zur energieautarken Auswertung der erfassten Körperschwingungsmessdaten in Hinblick auf wenigstens einen Systemzustand der zu vermessenden Einrichtung (1), insbesondere hinsichtlich eines Füllstandes (z7) von Flüssigkeit oder Feststoffen (7) in einem von der Einrichtung umgrenzten Innenvolumen (6), insbesondere eingerichtet zur Auswertung ausschließlich basierend auf den Körperschwingungsmessdaten.

2. Energieautarke Schwingungsmessvorrichtung (10) nach Anspruch 1, wobei die Schwingungsmessvorrichtung eine als Körperschwingungs-Kupplung (11) ausgebildete mechanische Schnittstelle aufweist und eingerichtet ist zur Erfassung der Körperschwingungsmessdaten auf nicht-optische Weise, insbesondere ausschließlich auf nicht-optische Weise; und/oder wobei die Schwingungsmessvorrichtung (10) eingerichtet ist zur Erfassung von Körperschwingungsmessdaten mittels der Körperschwingungs-Kupplung (11) in einer festkörperkontaktierenden Anordnung außen an der Einrichtung, außerhalb von einem von der Einrichtung umgrenzten Innenvolumen (6), insbesondere ohne Sicht ins Innenvolumen, insbesondere an einer Wandung (2) der Einrichtung; und/oder wobei die Körperschwingungs-Kupplung (11) Befestigungsmittel (12) umfassend wenigstens eine Schraubverbindung und/oder wenigstens einen Niet, insbesondere Blindniet umfasst; und/oder wobei die Körperschwingungs-Kupplung (11) Befestigungsmittel (12) umfassend wenigstens eine irreversible oder reversible Klebeverbindung umfasst; und/oder wobei die Körperschwingungs-Kupplung (11) eine zumindest abschnittsweise plane, ebene Körperschwingungsleitfläche (11.1) eingerichtet zur flächigen Aufnahme und Weiterleitung von Körperschwingungen der Einrichtung aufweist, insbesondere geometrisch korrespondierend zur Einrichtung; und/oder wobei die Körperschwingungs-Kupplung eine Körperschwingungsleitfläche (11.1) eingerichtet zur flächigen Kontaktierung der Einrichtung aufweist; und/oder wobei eine/die Körperschwingungsleitfläche (11.1) der Körperschwingungs-Kupplung (11) starr mit wenigstens einem Befestigungsmittel (12) der Körperschwingungs-Kupplung (11) verbunden ist.

3. Energieautarke Schwingungsmessvorrichtung (10) nach einem der vorhergehenden Ansprüche, wobei die Körperschwingungs-Kupplung (11) eingerichtet ist zur Erfassung der Körperschwingungsmessdaten aus Schwingungen der Einrichtung in Bezug auf wenigstens zwei Raumachsen (x, y, z), bevorzugt aus Schwingungen in Bezug auf alle drei Raumachsen, auf nicht-optische Weise über die Körperschwingungs-Kupplung und wenigstens einen mit der Körperschwingungs-Kupplung starr verbundenen Körperschwingungssensor (13), insbesondere einen Körperschwingungssensor mit Sensitivität in allen drei Raumachsen, insbesondere mikroelektromechanischen Körperschwingungssensor; und/oder wobei die Schwingungsmessvorrichtung wenigstens einen Körperschwingungssensor (13), insbesondere ein Accelerometer aufweist, insbesondere in relativer Anordnung zu einer/zur Körperschwingungs-Kupplung (11), insbesondere in starrer relativer Anordnung zu einer/zur Körperschwingungsleitfläche (11.1), insbesondere gekoppelt mittels eines starren Verbindungselements; und/oder wobei die Schwingungsmessvorrichtung wenigstens einen Körperschwingungssensor (13) umfassend eine Schallwandlungseinheit (13.1), insbesondere MEMS-Mikrofon aufweist.

4. Energieautarke Schwingungsmessvorrichtung (10) nach einem der vorhergehenden Ansprüche, wobei die Energieaufnahmeeinheit (15) wenigstens ein Solarmodul und/oder wenigstens ein piezoelektrisches Modul umfasst; und/oder wobei die Schwingungsmessvorrichtung (10), insbesondere die Recheneinheit (18) eingerichtet ist, die Art und Weise der Transmission, insbesondere Zeitpunkte für die Transmission, in Abhängigkeit vom Energieinhalt des Energiespeichers (17) und/oder vom Energiefluss in den Energiespeicher vorzugeben; und/oder wobei die Recheneinheit (18) eingerichtet ist, ein Transmissionsintervall (AI) basierend auf der mittels der Energieaufnahmeeinheit (15) bereitgestellten Energie und/oder basierend auf einem Ladezustand des Energiespeichers (17) zu definieren; und/oder wobei die Schwingungsmessvorrichtung (10) einen Lichtsensor (16) aufweist und eingerichtet ist, die mittels der Energieaufnahmeeinheit (15) bereitgestellte Energiemenge zu quantifizieren; und/oder wobei die Recheneinheit (18) eingerichtet ist, ein/das Transmissionsintervall (AI) anzupassen, sobald sich die am Energiespeicher (17) anliegende Spannung ändert, insbesondere indem über den Abstand zu einer vordefinierbaren Zielspannung eine Änderungsrate vorgegeben wird; und/oder wobei die Schwingungsmessvorrichtung (10) eingerichtet ist, in einen energiebedarfsreduzierten Tiefschlafmodus zu schalten oder die Transmission und/oder Erfassung zumindest auszusetzen, wenn mittels der Energieaufnahmeeinheit (15) keine Energie bereitgestellt wird; und/oder wobei die Recheneinheit (18) eingerichtet ist, basierend auf einer Ladungsmessung, insbesondere mittels Coulomb-Counter (15.1), eine Eingangs-/Ausgangsrechnung in der Art einer Energiebilanz am Energiespeicher (17) durchzuführen; und/oder wobei die Schwingungsmessvorrichtung (10) eingerichtet ist, die Transmission in einem energiebedarfsoptimierten, als "non-connectable" definierten Zustand vorzunehmen; und/oder wobei die Schwingungsmessvorrichtung (10) eingerichtet ist, zum Konfigurieren der Schwingungsmessvorrichtung in einen "connectable"-Zustand zu schalten, insbesondere in Abhängigkeit eines aktuellen Energieinhaltes der Energieaufnahmeeinheit (15), insbesondere aus einem Tiefschlafmodus heraus; und/oder wobei die Schwingungsmessvorrichtung (10) einen Lichtsensor (16) umfasst und eingerichtet ist, bei Bestrahlung größer einem vordefinierbaren Schwellwert in einen "connectable"-Zustand zu schalten, insbesondere für einen vordefinierten Zeitraum, insbesondere in Abhängigkeit eines aktuellen Energieflusses aus der Energieaufnahmeeinheit (15); und/oder wobei die Schwingungsmessvorrichtung (10) eingerichtet ist, in Reaktion auf wenigstens einen äußeren Einfluss aus einem Tiefschlafmodus in einen "connectable"-Zustand zu schalten, wobei der äußere Einfluss insbesondere zumindest aus der folgenden Gruppe definierbar ist: berührungslose Aktivierung durch ein magnetisches Feld, NFC-Verbindung.

5. Einrichtung (1), insbesondere Container, mit wenigstens einer daran befestigten energieautarken Schwingungsmessvorrichtung (10) nach einem der vorhergehenden Ansprüche, wobei die Schwingungsmessvorrichtung (10) außen an einer Wandung (2) der Einrichtung befestigt ist, insbesondere ohne Sichtkontakt in ein von der Wandung umgrenztes Innenvolumen (6).

6. Verfahren zum energieautarken Betreiben einer Schwingungsmessvorrichtung zum energieautarken Bereitstellen von Systemzustandsinformationen, insbesondere Füllstandsinformationen, bezüglich wenigstens eines von mehreren Systemzuständen einer zu vermessenden Einrichtung (1), insbesondere eines Containers, durch energieautarkes Erfassen von Körperschwingungsmessdaten an der Einrichtung (1), insbesondere mittels einer energieautarken Schwingungsmessvorrichtung (10) nach einem der vorhergehenden Ansprüche, wobei eine autarke Energieversorgung für den Zweck des Bereitstellens der Systemzustandsinformationen vorgesehen wird, indem mittels einer Energieaufnahmeeinheit (15) der Schwingungsmessvorrichtung Energie aus der Umgebung geerntet und in einen Energiespeicher (17) der Schwingungsmessvorrichtung eingespeist wird, wobei mittels eines Kommunikationsmoduls (14) der Schwingungsmessvorrichtung eine energieautarke drahtlose Transmission der Körperschwingungsmessdaten basierend auf wenigstens einem Kommunikationsprotokoll erfolgt, insbesondere aus der Gruppe der LP-WAN-Protokolle, insbesondere basierend auf SigFox und/oder NBIoT;
**gekennzeichnet durch** energieautarkes Erfassen der Körperschwingungsmessdaten an einer Festkörperoberfläche (2.1) der zu vermessenden Einrichtung (1), und ferner **durch** energieautarkes Auswerten der erfassten Körperschwingungsmessdaten in Hinblick auf den wenigstens einen Systemzustand, insbesondere einen Systemzustand oder einen Füllstand (z7) von Flüssigkeit oder Feststoffen (7) in einem von der Einrichtung umgrenzten Innenvolumen (6), wobei die Körperschwingungsmessdaten energieautark drahtlos transmittiert werden.

7. Verfahren nach dem vorhergehenden Verfahrensanspruch, wobei die Körperschwingungsmessdaten auf nicht-optische Weise, insbesondere ausschließlich auf nicht-optische Weise erfasst werden, insbesondere mittels wenigstens eines Körperschwingungssensors (13) der Schwingungsmessvorrichtung (10); und/oder wobei die Körperschwingungsmessdaten mittels der Körperschwingungs-Kupplung in einer festkörperkontaktierenden Anordnung außen an der Einrichtung, außerhalb von einem von der Einrichtung umgrenzten Innenvolumen (6), insbesondere ohne Sicht ins Innenvolumen erfasst werden; und/oder wobei die Körperschwingungsmessdaten mittels wenigstens eines in schwingungsleitender Verbindung an die Einrichtung gekoppelten Körperschwingungssensors (13) erfasst werden.

8. Verfahren nach einem der vorhergehenden Verfahrensansprüche, wobei das energieautarke Erfassen in einzelnen Zeitintervallen von jeweils einigen Sekunden, insbesondere 1 bis 10s, über einen Zeitraum von mindestens 1 bis 6 Tagen, Wochen oder Monaten durchgeführt wird; und/oder wobei das energieautarke Erfassen situationsbedingt initiiert durch wenigstens einen Köperschwingungssensor (13) der Schwingungsmessvorrichtung (10) durchgeführt wird, in Reaktion auf situationsbedingt auftretende Körperschwingungen, insbesondere in Abhängigkeit eines überschrittenen Mindestschwellwertes für eine Schwingungsintensität; und/oder wobei das Auswerten eine Differenzbildung zwischen zweiten Körperschwingungsmessdaten und vorhergehenden, zeitlich früher erfassten ersten Körperschwingungsmessdaten umfasst; und/oder wobei ein Abklingverhalten der Körperschwingungen ausgewertet wird, insbesondere in einem Zeitintervall von mindestens 2.5s; und/oder wobei die energieautarke Transmission jeweils nach einem Zeitintervall erfolgt, welches in Abhängigkeit des aktuellen Energieinhaltes des Energiespeichers (17) definiert wird; und/oder wobei die energieautarke Transmission erst dann erfolgt, wenn der Energieinhalt des Energiespeichers (17) einen vordefinierbaren Mindestschwellwert übersteigt.

9. Verfahren nach einem der vorhergehenden Verfahrensansprüche, wobei das Erfassen mittels wenigstens eines Körperschwingungssensors (13), insbesondere eines Accelerometers eingerichtet zur Erfassung der Körperschwingungsmessdaten in Bezug auf wenigstens zwei Raumachsen erfolgt, bevorzugt in Bezug auf alle drei Raumachsen; und/oder wobei das Erfassen ferner auch mittels einer Schallwandlungseinheit (13.1), insbesondere MEMS-Mikrofon erfolgt.

10. Verfahren nach einem der vorhergehenden Verfahrensansprüche, wobei das Einspeisen der Energie in den Energiespeicher (17) mittels eines Solarmoduls und/oder eines piezoelektrischen Moduls der Energieaufnahmeeinheit (15) erfolgt; und/oder wobei die Art und Weise der Transmission, insbesondere Zeitpunkte für die Transmission, in Abhängigkeit vom Energieinhalt des Energiespeichers (17) und/oder vom Energiefluss in den Energiespeicher vorgegeben werden, insbesondere mittels einer Recheneinheit (18) oder Steuerungseinheit der Schwingungsmessvorrichtung (10); und/oder wobei das Auswerten und die Transmission in Abhängigkeit eines Energieinhaltes des Energiespeichers (17) erfolgt, indem basierend auf einer Ladungsmessung eine Eingangs-/Ausgangsrechnung in der Art einer Energiebilanz am Energiespeicher (17) erfolgt; und/oder wobei ein Transmissionsintervall (AI) basierend auf der mittels der Energieaufnahmeeinheit (15) bereitgestellten Energie und/oder basierend auf einem Ladezustand des Energiespeichers (17) definiert wird; und/oder wobei die mittels der Energieaufnahmeeinheit bereitgestellte Energiemenge mittels eines Lichtsensors (16) der Schwingungsmessvorrichtung quantifiziert wird; und/oder wobei ein/das Transmissionsintervall (AI) angepasst wird, sobald sich die am Energiespeicher (17) anliegende Spannung ändert, insbesondere indem über den Abstand zu einer vordefinierbaren Zielspannung eine Änderungsrate vorgegeben wird; und/oder wobei die Schwingungsmessvorrichtung (10) in einen energiebedarfsreduzierten Tiefschlafmodus schaltet oder die Transmission und/oder Erfassung zumindest zeitweise aussetzt, wenn mittels der Energieaufnahmeeinheit (15) keine Energie bereitgestellt wird; und/oder wobei basierend auf einer Ladungsmessung, insbesondere mittels Coulomb-Counter, eine Eingangs-/Ausgangsrechnung in der Art einer Energiebilanz am Energiespeicher (17) durchgeführt wird; und/oder wobei die Transmission in einem energiebedarfsoptimierten, als "non-connectable" definierten Zustand der Schwingungsmessvorrichtung (10) erfolgt; und/oder wobei die Schwingungsmessvorrichtung zum Konfigurieren in einen "connectable"-Zustand geschaltet wird, insbesondere in Abhängigkeit eines aktuellen Energieinhaltes des Energiespeichers (17), insbesondere aus einem Tiefschlafmodus heraus; und/oder wobei die Schwingungsmessvorrichtung bei Bestrahlung größer einem vordefinierbaren Schwellwert in einen "connectable"-Zustand schaltet, insbesondere für einen vordefinierten Zeitraum, insbesondere in Abhängigkeit eines aktuellen Energieinhaltes des Energiespeichers (17); und/oder wobei die Schwingungsmessvorrichtung (10) in Reaktion auf wenigstens einen äußeren Einfluss aus einem Tiefschlafmodus in einen "connectable"-Zustand schaltet, wobei der äußere Einfluss insbesondere zumindest aus der folgenden Gruppe definiert wird: berührungslose Aktivierung durch ein magnetisches Feld, NFC-Verbindung.

11. Verwendung wenigstens eines Körperschwingungssensors (13), insbesondere Accelerometers in einer energieautarken Schwingungsmessvorrichtung, insbesondere einer energieautarken Schwingungsmessvorrichtung (10) nach einem der vorhergehenden Ansprüche, die mittels Befestigungsmitteln (12) umfassend wenigstens eine Schraubverbindung und/oder wenigstens einen Niet, insbesondere Blindniet, und/oder wenigstens eine irreversible oder reversible Klebeverbindung in einer Anordnung außen an Einrichtung (1), insbesondere einem Container befestigt ist, zum Erfassen von Körperschwingungsmessdaten zum Auswerten eines Systemzustands der zu vermessenden Einrichtung.

12. Verfahren zum energieautarken Bereitstellen von Systemzustandsinformationen, insbesondere Füllstandsinformationen, bezüglich wenigstens eines von mehreren Systemzuständen einer zu vermessenden Einrichtung (1), insbesondere eines Containers, durch energieautarkes Auswerten von energieautark an der Einrichtung erfassten Körperschwingungsmessdaten, insbesondere mittels einer energieautarken Schwingungsmessvorrichtung (10) nach einem der vorhergehenden Ansprüche;
**gekennzeichnet durch** energieautarkes Auswerten der erfassten Körperschwingungsmessdaten in Hinblick auf wenigstens einen Systemzustand, insbesondere einen Füllstand (z7) von Flüssigkeit oder Feststoffen (7), in einem von der Einrichtung umgrenzten Innenvolumen (6) ausschließlich basierend auf den Körperschwingungsmessdaten, wobei das Auswerten eine Differenzbildung zwischen zweiten Körperschwingungsmessdaten und vorhergehenden, zeitlich früher erfassten ersten Körperschwingungsmessdaten umfasst.

13. Verfahren nach dem vorhergehenden Verfahrensanspruch, wobei das energieautarke Auswerten basierend auf einer Differenzbildung zu vorhergehenden Körperschwingungsmessdaten jeweils als Funktion oder in Abhängigkeit oder zum Zeitpunkt einer neu erfassten Schwingung erfolgt, insbesondere auch unter Verwendung wenigstens eines selbstlernenden Algorithmus, insbesondere unter Bezugnahme auf wenigstens ein vordefiniertes, in einer Schwingungsdatenbank hinterlegtes Schwingungsmuster; und/oder wobei ein Abklingverhalten der Körperschwingungen ausgewertet wird; und/oder wobei eine Aufteilung der Körperschallmessdaten und/oder eine Ausübung der Auswertung auf wenigstens zwei Ebenen erfolgt, insbesondere umfassend eine Cloud-Ebene und eine Sensor-Ebene; und/oder wobei wenigstens eine Vergleichsmessung erfolgt, insbesondere basierend auf Ultraschallmesswerten, insbesondere zur Erfassung von Referenzwerten, insbesondere permanent und/oder simultan, und wobei ein Vergleich mit den ausgewerteten Körperschwingungsmessdaten erfolgt, insbesondere simultan.

14. Computerprogrammprodukt (20) eingerichtet zum Steuern eines Verfahrens zum energieautarken Betreiben einer Schwingungsmessvorrichtung nach einem der vorhergehenden Verfahrensansprüche und/oder eingerichtet zum Ansteuern einer energieautarken Schwingungsmessvorrichtung (10) nach einem der vorhergehenden Vorrichtungsansprüche, wobei das Computerprogrammprodukt (20) insbesondere eingerichtet ist, das Erfassen, die Auswertung und/oder die Transmission der Körperschwingungsmessdaten in Abhängigkeit eines Energieinhalts und/oder Energieflusses zu steuern; und/oder Computerprogrammprodukt (20) eingerichtet zum Auswerten von Körperschwingungsmessdaten erfasst mittels eines Verfahrens zum Bereitstellen von Systemzustandsinformationen nach einem der vorhergehenden Verfahrensansprüche und/oder mittels einer energieautarken Schwingungsmessvorrichtung (10) nach einem der vorhergehenden Vorrichtungsansprüche, wobei das Computerprogrammprodukt (20) insbesondere eingerichtet ist, das Auswerten der erfassten Körperschwingungsmessdaten in Hinblick auf wenigstens einen Systemzustand der zu vermessenden Einrichtung (1) durchzuführen, indem aus einem zeitlichen Verlauf der Körperschwingungsmessdaten zwischen wenigstens einer ersten und einer zweiten Messung auf den Systemzustand geschlossen wird, insbesondere auf den Systemzustand in einem von der Einrichtung (1) umgrenzten Innenvolumen (6), insbesondere in Hinblick auf einen Füllstand (z7) von Flüssigkeit oder Feststoffen (7) im Innenvolumen.

15. Verwendung einer energieautarken Schwingungsmessvorrichtung, insbesondere einer energieautarken Schwingungsmessvorrichtung (10) nach einem der vorhergehenden Vorrichtungsansprüche, zur energieautarken Erfassung von Körperschwingungsmessdaten an einer zu vermessenden Einrichtung (1) in Form eines Containers, wobei sich die Schwingungsmessvorrichtung aus wenigstens einem durch eine Energieaufnahmeeinheit (15) mit von aus der Umgebung geernteter Energie gespeisten Energiespeicher (17) autark mit Energie versorgt und mittels wenigstens eines Kommunikationsmoduls (14) energieautark drahtlos die Schwingungsmessdaten basierend auf wenigstens einem Kommunikationsprotokoll transmittiert, insbesondere aus der Gruppe der LP-WAN-Protokolle, insbesondere basierend auf SigFox und/oder NBIoT, und in einer Montageposition außen an einer Festkörperoberfläche (2.1) des Containers die Körperschwingungsmessdaten auf nicht-optische Weise erfasst, und die erfassten Körperschwingungsmessdaten in Hinblick auf wenigstens einen Systemzustand der zu vermessenden Einrichtung (1) auswertet und transmittiert, insbesondere einen Systemzustand oder einen Füllstand von Flüssigkeit oder Feststoffen (7) in einem von der Einrichtung umgrenzten Innenvolumen (6); und/oder Verwendung eines Computerprogrammproduktes und/oder einer Recheneinheit zum Auswerten von Körperschwingungsmessdaten erfasst an einer Einrichtung in Form eines Containers, mittels einer energieautarken Schwingungsmessvorrichtung, insbesondere einer energieautarken Schwingungsmessvorrichtung nach einem der vorhergehenden Vorrichtungsansprüche, indem aus einem zeitlichen Verlauf der Körperschwingungsmessdaten zwischen wenigstens einer ersten und einer zweiten Messung auf den Füllstand im Container geschlossen wird, insbesondere bei einem Verfahren nach einem der vorhergehenden Verfahrensansprüche, insbesondere zum Auswerten eines zeitlichen Verlaufs der Körperschwingungsmessdaten zwischen wenigstens einer ersten und einer zweiten Messung und/oder zum Auswerten eines Abklingverhaltens.
